(19) 

Europäisches Patentamt

European Patent Office

Office européen des brevets

(11) **EP 4 682 610 A2**

(12) **EUROPEAN PATENT APPLICATION**

(43) Date of publication:
**21.01.2026 Bulletin 2026/04**

(21) Application number: **25217112.9**

(22) Date of filing: **19.11.2025**

(51) International Patent Classification (IPC):
**G02B 13/00** (2006.01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.11.2024 CN 202411679786**

(71) Applicant: **Jiangxi OFILM Optical Co. Ltd.
Nanchang, Jiangxi 330096 (CN)**

(72) Inventors:
• **ZHANG, Han
Shenzhen, 518106 (CN)**
• **LIU, Binbin
Shenzhen, 518106 (CN)**

(74) Representative: **Metida
Gyneju str. 16
01109 Vilnius (LT)**

(54) **OPTICAL SYSTEM, CAMERA LENS, AND ELECTRONIC DEVICE**

(57)    An optical system, a camera lens, and an electronic device are provided, so as to implement lightening and thinning of the optical system, obtain a short total length, increase pixel counts of the optical system, and improve an image quality of the optical system. The optical system includes, an aperture stop, a first lens, a second lens, a third lens, a fourth, a fifth lens, a sixth lens, and a seventh lens. Object side surfaces of the first, second, and sixth lenses and image side surfaces of the third and fifth lenses are convex near the optical axis. Image side surfaces of the first, second, sixth, and seventh lenses and object side surfaces of the third, fifth, and seventh lenses are concave near the optical axis. The optical system satisfies following relationships: 1.45<FNO<1.9, 79deg<FOV<91deg, and 1.2<TTL/ImgH<1.4.

FIG. 1A

**Description**

FIELD

The subject matter relates to the field of optical imaging, and more particularly, to an optical system, a camera lens, and an electronic device.

BACKGROUND

With rapid development of mobile electronic devices such as smartphones and tablets, people have growing requirements for camera lenses installed on the mobile electronic devices. On the one hand, people are pursuing the lighter and thinner smartphones, and a total length of a camera lens needs to be shortened accordingly. On the other hand, people have growing requirements for pixel counts of an image captured by the camera lens, which requires meeting high pixel counts while maintaining a short total length of the camera lens.

Currently, high-pixel lenses on the market generally use a six-element optical system and a seven-element optical system. The six-element optical system has a shorter total length than the seven-element optical system, but the resolution of the six-element optical system is insufficient to meet people's increasing demand for shooting. The seven-element optical system improves the resolution by adding a lens, but the total length of the optical system will increase accordingly, making it difficult to adapt to a thin and light smartphone. Therefore, lenses that can meet both high pixel requirements and ultra-thin total length specifications are currently one of the hot research topics for relevant technical personnel.

SUMMARY

In view of the above, an optical system, a camera lens, and an electronic device are provided, so as to achieve high pixel counts while maintaining a short total length.

In a first aspect, an embodiment of the present application provides an optical system. The optical system includes, in order from an object side to an image side along an optical axis, an aperture stop, a first lens having a positive focal power, a second lens having a negative focal power, a third lens having a focal power, a fourth lens having a focal power, a fifth lens having a focal power, a sixth lens having a positive focal power, and a seventh lens having a negative focal power. An object side surface of the first lens is convex near the optical axis, and an image side surface of the first lens is concave near the optical axis. An object side surface of the second lens is convex near the optical axis, and an image side surface of the second lens is concave near the optical axis. An object side surface of the third lens is concave near the optical axis, and an image side surface of the third lens is convex near the optical axis. An object side surface of the fifth lens is concave near the optical axis, and an image side surface of the fifth lens is convex near the optical axis. An object side surface of the sixth lens is convex near the optical axis, and an image side surface of the sixth lens is concave near the optical axis. An object side surface of the seventh lens is concave near the optical axis, and an image side surface of the seventh lens is concave near the optical axis. The optical system satisfies following relationships: 1.45<FNO<1.9, 79deg<FOV<91deg, 1.2<TTL/ImgH<1.4, wherein FNO is an aperture number of the optical system, FOV is a full field of view of the optical system, TTL is a distance from the object side surface of the first lens to an imaging plane of the optical system on the optical axis, and ImgH is half of a diagonal length of an effective pixel region on an imaging plane of the optical system.

The above optical system includes the first lens having positive refractive power and the second lens having negative refractive power are provided, so that on-axis spherical aberration of the optical system may be corrected. The third, fourth, and fifth lens have focal power, the object side surfaces of the third and fifth lenses are concave near the optical axis, and the image side surfaces of the third and fifth lenses are convex near the optical axis, so that the third lens, the fourth lens, and the fifth lens may be arranged compactly, the focal powers of the third lens, the fourth lens, and the fifth lens may be reasonably configured, and astigmatism in the optical system may be corrected. The sixth lens has a positive focal power and the seventh lens has a negative focal power, so that field curvature of the optical system may be corrected. The image side surface of the first lens is concave near the optical axis and the object side surface of the second lens is convex near the optical axis, so that a total length of the optical system may be reduced. The object side surface of the sixth lens is convex near the optical axis, so that astigmatism and field curvature of the optical system may be reduced. Therefore, the first lens, the second lens, the third lens, the fourth lens, the fifth lens, the sixth lens, and the seventh lens are arranged compactly, the focal powers of the first lens, the second lens, the third lens, the fourth lens, the fifth lens, the sixth lens, and the seventh lens are reasonably configured, so that the optical system is thin and light, a total length of the optical system is short, the pixel counts of the optical system are increased, and an image quality of the optical system is good.

Furthermore, by setting the optical system to satisfy the relationship of 1.45<FNO<1.9, the optical system has a large aperture, and the optical system has a sufficient amount of incoming light beams, such that the images captured by the optical system may be clearer. Thus, the optical system may be suitable for capturing images of night scenes, starry sky, and other space scenes with a low brightness. By setting the optical system to satisfy the relationship of 79deg<FOV<91deg, a maximum field of view of the optical system may be controlled within a reasonable range, thereby giving the optical system a wide visual field characteristic, avoiding excessive aberrations, achieving miniaturization of the optical system while obtaining a sufficient field of view, and thus enabling the optical system to have high pixel counts and high resolution characteristics. By setting the optical system to satisfy the relationship of 1.2<TTL/ImgH<1.4, the resolution of the optical system across the entire field of view may be improved, and the imaging quality of the optical system at the edges of the field of view may be improved. At the same time, the optical system may have ultra-thin characteristics, such that the total optical length of the optical system may be short. Therefore, the optical system may have advantages in capturing objects at a medium focal length and in miniaturizing a camera lens.

In the second aspect, the present application further provides a camera module. The camera module includes a lens barrel, the above optical system disposed in the lens barrel, and a photosensitive element disposed in the lens barrel and located on the image side of the optical system.

By adding the optical system provided by the embodiment of the present application to the above camera lens, by compactly arranging the lenses in the optical system, reasonably distributing the optical focal length, and limiting FNO, FOV, TTL, and ImgH, it is helpful to implement lightening and thinning of the camera lens, to obtain a short total length, and also to increase the pixel counts of the camera lens, and thus obtain a better image quality.

In a third aspect, the present application provides an electronic device. The electronic device includes a housing and the above camera lens, and the camera lens is mounted on the housing.

By adding the camera module provided by the present application to the above electronic device, arranging the lenses in the camera lens's optical system in a compact spatial manner, reasonably configuring the focal powers, and limiting FNO, FOV, TTL, and ImgH, it is helpful to implement lightening and thinning of the camera lens, to obtain a short total length, and also to increase the pixel counts of the camera lens, and thus obtain a better image quality.

BRIEF DESCRIPTION OF THE DRAWINGS

FIG. 1A is a schematic diagram of an optical system according to a first embodiment of the present application of the present application.
FIG. 1B shows a longitudinal spherical aberration curve diagram, an astigmatism curve diagram, and a distortion curve diagram of the optical system of the first embodiment of the present application.
FIG. 2A is a schematic diagram of an optical system according to a second embodiment of the present application.
FIG. 2B shows a longitudinal spherical aberration curve diagram, an astigmatism curve diagram, and a distortion curve diagram of the optical system of the second embodiment of the present application.
FIG. 3A is a schematic diagram of an optical system according to a third embodiment of the present application.
FIG. 3B shows a longitudinal spherical aberration curve diagram, an astigmatism curve diagram, and a distortion curve diagram of the optical system of the third embodiment of the present application.
FIG. 4A is a schematic diagram of an optical system according to a fourth embodiment of the present application.
FIG. 4B shows a longitudinal spherical aberration curve diagram, an astigmatism curve diagram, and a distortion curve diagram of the optical system of the fourth embodiment of the present application.
FIG. 5A is a schematic diagram of an optical system according to a fifth embodiment of the present application.
FIG. 5B shows a longitudinal spherical aberration curve diagram, an astigmatism curve diagram, and a distortion curve diagram of the optical system of the fifth embodiment of the present application.
FIG. 6A is a schematic diagram of an optical system according to a sixth embodiment of the present application.
FIG. 6B shows a longitudinal spherical aberration curve diagram, an astigmatism curve diagram, and a distortion curve diagram of the optical system of the sixth embodiment of the present application.
FIG. 7A is a schematic diagram of an optical system according to a seventh embodiment of the present application.
FIG. 7B shows a longitudinal spherical aberration curve diagram, an astigmatism curve diagram, and a distortion curve diagram of the optical system of the seventh embodiment of the present application.
FIG. 8 is a schematic diagram of a camera module according to an embodiment of the present application.
FIG. 9 is a schematic diagram of an electronic device according to an embodiment of the present application.

DETAILED DESCRIPTION

The embodiments of this application are described in detail below. Examples of these embodiments are shown in the accompanying drawings, wherein the same or similar reference numerals denote the same or similar elements or elements having the same or similar functions throughout. The embodiments described below with reference to the accompanying drawings are exemplary and are only used to explain this application, and should not be construed as limiting this application.

In a first aspect, the present application provides an optical system. The optical system includes, in order from an object side to an image side along an optical axis, an aperture, a first lens, a second lens, a third lens, a fourth lens, a fifth lens, a sixth lens, and a seventh lens.

The first lens has a positive focal power, an object side surface of the first lens is convex near the optical axis, and an image side surface of the first lens is concave near the optical axis. The second lens has a negative focal power, an object side surface of the second lens is convex near the optical axis, and an image side surface of the second lens is concave near the optical axis. The third lens has a focal power, an object side surface of the third lens is concave near the optical axis, and an image side surface of the third lens is convex near the optical axis. The fourth lens has a focal power. The fifth lens has a focal power, an object side surface of the fifth lens is concave near the optical axis, and an image side surface of the fifth lens is convex near the optical axis. The sixth lens has a positive focal power, an object side surface of the sixth lens is convex near the optical axis, and an image side surface of the sixth lens is concave near the optical axis. The seventh lens has a negative focal power, an object side surface of the seventh lens is concave near the optical axis, and an image side surface of the seventh lens is concave near the optical axis.

The above optical system includes the first lens having positive refractive power and the second lens having negative refractive power are provided, so that on-axis spherical aberration of the optical system may be corrected. The third, fourth, and fifth lens have focal power, the object side surfaces of the third and fifth lenses are concave near the optical axis, and the image side surfaces of the third and fifth lenses are convex near the optical axis, so that the third lens, the fourth lens, and the fifth lens may be arranged compactly, the focal powers of the third lens, the fourth lens, and the fifth lens may be appropriately configured, and astigmatism in the optical system may be corrected. The sixth lens has a positive focal power and the seventh lens has a negative focal power, so that field curvature of the optical system may be corrected. The image side surface of the first lens is concave near the optical axis and the object side surface of the second lens is convex near the optical axis, so that a total length of the optical system may be reduced. The object side surface of the sixth lens is convex near the optical axis, so that astigmatism and field curvature of the optical system may be reduced. Therefore, the first lens, the second lens, the third lens, the fourth lens, the fifth lens, the sixth lens, and the seventh lens are arranged compactly, the focal powers of the first lens, the second lens, the third lens, the fourth lens, the fifth lens, the sixth lens, and the seventh lens are appropriately configured, so that the optical system is thin and light, a total length of the optical system is short, the pixel counts of the optical system are increased, and an image quality of the optical system is good.

In some embodiments, the object side surface of the sixth lens gradually changes from a convex surface near the optical axis to a concave surface near a circumference thereof, the image side surface of the sixth lens gradually changes from a concave surface near the optical axis to a convex surface near a circumference thereof, the object side surface of the seventh lens is concave near the optical axis, the image side surface of the seventh lens is concave near the optical axis, and the image side surface of the seventh lens has at least one inflection point. The object side surface of the sixth lens gradually changes from a convex surface near the optical axis to a concave surface near the circumference thereof, thereby changing a propagation path of the a ray may be changed and thus adjusting a focal point or improving distribution of the light beam. The image side surface of the sixth lens gradually changes from a concave surface near the optical axis to a convex surface near the circumference thereof, so that different focusing or divergence effects may be provided at different positions, to implement more complex light control. The object side surface of the seventh lens is concave near the optical axis, which reduces focusing of the rays, thereby reducing aberrations or improving uniformity of the light beam. The image side surface of the seventh lens is concave near the optical axis, and the image side surface of the seventh lens has at least one inflection point, which can correct aberrations. Especially in a high-resolution imaging system, it helps to reduce spherical aberration and optical distortion.

In some embodiments, the optical system satisfies the relationship of 1.45<FNO<1.9, wherein FNO is an F-number of the optical system. By setting the optical system to satisfy the above relationship, the optical system has a large aperture, and the optical system has a sufficient amount of incoming light beams, such that the images captured by the optical system may be clearer. Thus, the optical system may be suitable for capturing images of night scenes, starry sky, and other space scenes with a low brightness. In addition, excessive aberration may be prevented from being introduced into the optical system, such that the optical system may achieve overall balance. Furthermore, when the relationship of 1.55<FNO<1.85 is satisfied, the imaging quality of the optical system may be further improved.

In some embodiments, the optical system satisfies the relationship of 79deg<FOV<91deg, wherein FOV is a full field of view of the optical system. By setting the optical system to satisfy the above relationship, a maximum field of view of the optical system may be controlled within a reasonable range, thereby giving the optical system a wide visual field characteristic, avoiding excessive aberrations, achieving miniaturization of the optical system while obtaining a sufficient field of view, and thus enabling the optical system to have high pixel counts and high resolution characteristics. Furthermore, when the relationship of 81deg<FOV<89deg is satisfied, the imaging quality of the optical system may be further improved.

In some embodiments, the optical system satisfies the relationship of 1.2<TTL/ImgH<1.4, wherein TTL is a distance from the object side surface of the first lens to an imaging plane of the optical system on the optical axis, and ImgH is half of a diagonal length of an effective pixel area on the imaging plane of the optical system. By setting the optical system to satisfy the above relationship, the resolution of the optical system across the entire field of view may be improved, and the imaging quality of the optical system at the edges of the field of view may be improved. At the same time, the optical system may have ultra-thin characteristics, such that the total optical length of the optical system may be short. Therefore, the optical system may have advantages in capturing objects at a medium focal length and in miniaturizing a camera lens. Furthermore, when the relationship of 1.23<TTL/ImgH<1.34 is satisfied, the imaging quality of the optical system may be further improved.

In some embodiments, the optical system satisfies the relationship of 0.8<f1/f<1.3, wherein f1 is an effective focal length of the first lens, and f is an effective focal length of the optical system. By setting the optical system to satisfy the above relationship, the first lens may have proper focal power in the optical system and the surface design of the first lens is simple and flexible, such that the first lens may support a larger field of view and a large aperture. At the same time, the above relationship may further facilitate the converge of the rays incident from the first lens to the optical system, reduce the incidence angle of the rays, and reduce the aberration, and thus facilitate the balance between the overall aberration correction and the imaging quality of the optical system.

In some embodiments, the optical system satisfies the relationship of -5<f2/f<-1.5, wherein f2 is an effective focal length of the second lens, and f is the effective focal length of the optical system. By setting the optical system to satisfy the above relationship, the second lens may have proper focal power in the optical system, the surface design of the second lens may be simple and flexible, and the aberration may be reduced, such that the balance between the overall aberration correction and the imaging quality of the optical system may be achieved. Furthermore, when the relationship of -4.1<f2/f<-2 is satisfied, the imaging quality of the optical system may be further improved.

In some embodiments, the optical system satisfies the relationship of 2<|f3|/f, wherein f3 is an effective focal length of the third lens, and f is the effective focal length of the optical system. By setting the optical system to satisfy the above relationship, the third lens may have proper focal power in the optical system, the surface design of the third lens may be simple and flexible, and the aberration may be reduced, such that the balance between the overall aberration correction and the imaging quality of the optical system may be achieved.

In some embodiments, the optical system satisfies the relationship of 3<|f4|/f, wherein f4 is an effective focal length of the fourth lens, and f is the effective focal length of the optical system. By setting the optical system to satisfy the above relationship, the fourth lens may have proper focal power in the optical system, the surface design of the fourth lens may be simple and flexible, and the aberration may be reduced, such that the balance between the overall aberration correction and the imaging quality of the optical system may be achieved.

In some embodiments, the optical system satisfies the relationship of 7<|f5|/f, wherein f5 is an effective focal length of the fifth lens, and f is the effective focal length of the optical system. By setting the optical system to satisfy the above relationship, the fifth lens may gently diffuse the rays, which forms basis for subsequent imaging on large imaging plane.

In some embodiments, the optical system satisfies the relationship of 0.9<f6/f<1.6, wherein f6 is an effective focal length of the sixth lens, and f is the effective focal length of the optical system. By setting the optical system to satisfy the above relationship, the focal power of the sixth lens will not be too strong for an effective focal length of the entire optical system, thereby enabling the sixth lens to balance the aberrations of the lenses in front of the sixth lens, and thus improve the imaging quality of the optical system. Furthermore, when the relationship of 1<f6/f<1.5 is satisfied, the imaging quality of the optical system may be further improved.

In some embodiments, the optical system satisfies the relationship of -0.9<f7/f<-0.6, wherein f7 is an effective focal length of the seventh lens, and f is the effective focal length of the optical system. By setting the optical system to satisfy the above relationship, the seventh lens may cooperate with the lenses in front of the seventh lens to eliminate aberrations, thereby achieving miniaturization of the optical system.

In some embodiments, the optical system satisfies the relationship of 0.3<R11/f<0.6, wherein R11 is a radius of curvature of the object side surface of the first lens at the optical axis, and f is the effective focal length of the optical system. By setting the optical system to satisfy the above relationship, the first lens may maintain reasonable astigmatism, thereby improving the imaging quality of the optical system. Furthermore, when the relationship of 0.4<R11/f<0.5 is satisfied, the imaging quality of the optical system may be further improved.

In some embodiments, the optical system satisfies the following relationship: 1.2<R12/f<3, wherein R12 is a radius of curvature of the image side surface of the first lens at the optical axis, and f is the effective focal length of the optical system. By setting the optical system to satisfy the above relationship, the first lens may maintain reasonable astigmatism, thereby improving the imaging quality of the optical system. Furthermore, when the relationship of 1.4<R12/f<2.7 is satisfied, the imaging quality of the optical system may be further improved.

In some embodiments, the optical system satisfies the relationship of 0.8<R21/f<1.6, wherein R21 is a radius of curvature of the object side surface of the second lens at the optical axis, and f is the effective focal length of the optical system. By setting the optical system to satisfy the above relationship, the second lens may maintain reasonable astigmatism, and astigmatism generated by the first lens may be effectively balanced, thereby improving the imaging quality of the optical system. Furthermore, when the relationship of 0.9<R21/f<1.5 is satisfied, the imaging quality of the optical system may be further improved.

In some embodiments, the optical system satisfies the relationship of 0.4<R22/f<1.1, wherein R22 is a radius of curvature of the image side surface of the second lens at the optical axis, and f is the effective focal length of the optical system. By setting the optical system to satisfy the above relationship, the second lens may maintain reasonable astigmatism, and astigmatism generated by the first lens may be effectively balanced, thereby improving the imaging quality of the optical system. Furthermore, when the relationship of 0.6<R22/f<0.9 is satisfied, the imaging quality of the optical system may be further improved.

n some embodiments, the optical system satisfies the relationship of R31/f<-2.5, wherein R31 is a radius of curvature of the object side surface of the third lens at the optical axis, and f is the effective focal length of the optical system. By setting the optical system to satisfy the above relationship, the third lens may maintain reasonable surface shape, and astigmatism generated by the first lens and the second lens may be effectively balanced, thereby improving the imaging quality of the optical system. Furthermore, when the relationship of -16<R31/f<-3 is satisfied, the imaging quality of the optical system may be further improved.

In some embodiments, the optical system satisfies the relationship of R32/f<-0.7, wherein R32 is a radius of curvature of the image side surface of the third lens at the optical axis, and f is the effective focal length of the optical system. By setting the optical system to satisfy the above relationship, the third lens may maintain reasonable surface shape, and astigmatism generated by the first lens and the second lens may be effectively balanced, thereby improving the imaging quality of the optical system. Furthermore, when the relationship of -9<R32/f<-0.8 is satisfied, the imaging quality of the optical system may be further improved.

In some embodiments, the optical system satisfies the relationship of 1.2<|R41|/f, wherein R41 is a radius of curvature of the object side surface of the fourth lens at the optical axis, and f is the effective focal length of the optical system. By setting the optical system to satisfy the above relationship, the fourth lens may have reasonable surface shape, and the fourth lens may operate with the first to third lenses to form a double Gaussian structure, thereby improving the imaging quality of the optical system.

In some embodiments, the optical system satisfies the relationship of 2.3<|R42|/f, wherein R42 is a radius of curvature of the image side surface of the fourth lens at the optical axis, and f is the effective focal length of the optical system. By setting the optical system to satisfy the above relationship, the fourth lens may have reasonable surface shape, and the fourth lens may operate with the first to third lenses to form the double Gaussian structure, thereby improving the imaging quality of the optical system.

In some embodiments, the optical system satisfies the relationship of -2<R51/f<-1.4, wherein R51 is a radius of curvature of the object side surface of the fifth lens at the optical axis, and f is the effective focal length of the optical system. By setting the optical system to satisfy the above relationship, the fifth lens may have reasonable focal power other than strong focal power, such that the fifth lens may gently receive the rays from the object side, thereby improving the imaging quality of the optical system. Furthermore, when the relationship of -1.7<R51/f<-1.5 is satisfied, the imaging quality of the optical system may be further improved.

In some embodiments, the optical system satisfies the relationship of -3<R52/f<-1.1, wherein R52 is a radius of curvature of the image side surface of the fifth lens at the optical axis, and f is the effective focal length of the optical system. By setting the optical system to satisfy the above relationship, the fifth lens may have reasonable focal power other than strong focal power, such that the fifth lens may gently receive the rays from the object side, thereby improving the imaging quality of the optical system. Furthermore, when the relationship of -2.6<R52/f<-1.2 is satisfied, the imaging quality of the optical system may be further improved.

In some embodiments, the optical system satisfies the relationship of 0.4<R61/f<0.8, wherein R61 is a radius of curvature of the object side surface of the sixth lens at the optical axis, and f is the effective focal length of the optical system. By setting the optical system to satisfy the above relationship, the sixth lens may maintain reasonable surface shape, balance may be obtained between the overall performance of the sixth lens and the seventh lens, and the surface shape of the sixth lens may match the seventh lens to correct aberration, thereby improving the imaging quality of the optical system. Furthermore, when the relationship of 0.5<R61/f<0.7 is satisfied, the imaging quality of the optical system may be further improved.

In some embodiments, the optical system satisfies the relationship of 2.3<R62/f<5, wherein R62 is a radius of curvature of the image side surface of the sixth lens at the optical axis, and f is the effective focal length of the optical system. By setting the optical system to satisfy the above relationship, the sixth lens may maintain reasonable surface shape, balance may be obtained between the overall performance of the sixth lens and the seventh lens, and the surface shape of the sixth lens may match the seventh lens to correct aberration, thereby improving the imaging quality of the optical system. Furthermore, when the relationship of 2.8<R62/f<4.3 is satisfied, the imaging quality of the optical system may be further improved.

In some embodiments, the optical system satisfies the relationship of R71/f<-3, wherein R71 is a radius of curvature of the object side surface of the seventh lens at the optical axis, and f is the effective focal length of the optical system. By setting the optical system to satisfy the above relationship, the seventh lens may maintain reasonable surface shape, balance may be obtained between the overall performance of the seventh lens and the sixth lens, and the surface shape of the seventh lens may match the sixth lens to correct aberration, thereby improving the imaging quality of the optical system. Furthermore, when the relationship of -14<R71/f<-5 is satisfied, the imaging quality of the optical system may be further improved.

In some embodiments, the optical system satisfies the relationship of 0.3<R72/f<0.6, wherein R72 is a radius of curvature of the image side surface of the seventh lens at the optical axis, and f is the effective focal length of the optical system. By setting the optical system to satisfy the above relationship, the seventh lens may maintain reasonable surface shape, balance may be obtained between the overall performance of the seventh lens and the sixth lens, and the surface shape of the seventh lens may match the sixth lens to correct aberration, thereby improving the imaging quality of the optical system. Furthermore, when the relationship of 0.35<R72/f<0.5 is satisfied, the imaging quality of the optical system may be further improved.

In some embodiments, the optical system satisfies the relationship of 1.9<|f67/f|<15.5, wherein f67 is a combined focal length of the sixth and seventh lenses, and f7 is the effective focal length of the seventh lens. By setting the optical system to satisfy the above relationship, the combined focal length of the sixth and seventh lenses and a total effective focal length of the optical system may be appropriately configured, and spherical aberration generated by off-axis rays at different aperture positions in the optical system may be corrected, thereby improving the imaging quality of the optical system.

In some embodiments, the optical system satisfies the relationship of 4<(|f1|+|f2|)/|f7|<7.0, wherein f7 is the effective focal length of the seventh lens, f1 is the effective focal length of the first lens, and f2 is the effective focal length of the second lens. By setting the optical system to satisfy the above relationship, the ratio of the refractive power of the seventh lens to the sum of the refractive powers of the first and second lenses is reasonably controlled, and spherical aberration contributions of the first, second, and seventh lenses to the optical system may be reasonably allocated, thereby improving the imaging quality of the on-axis region of the optical system.

In some embodiments, the optical system satisfies the relationship of 1.5<AT23/(AT12+AT34+AT56)<3.5, wherein AT12 is a distance on the optical axis from the image side surface of the first lens to the object side surface of the second lens, AT23 is a distance on the optical axis from the image side surface of the second lens to the object side surface of the third lens, AT34 is a distance on the optical axis from the image side surface of the third lens to the object side surface of the fourth lens, and AT56 is a distance on the optical axis from the image side surface of the fifth lens to the object side surface of the sixth lens. By setting the optical system to satisfy the above relationship, it is beneficial to balance the higher-order aberrations generated by the optical system, adjust the field curvature in engineering production, improve the imaging quality of the optical system, and reasonably control gaps between lenses, thereby improving imaging quality and assemblability. Furthermore, when the relationship of 1.6<AT23/(AT12+AT34+AT56)<3.1 is satisfied, the imaging quality of the optical system may be further improved.

In some embodiments, the optical system satisfies the relationship of 2.7<AT45/(AT12+AT34+AT56)<5.5, wherein AT12 is a distance on the optical axis from the image side surface of the first lens to the object side surface of the second lens, AT34 is a distance on the optical axis from the image side surface of the third lens to the object side surface of the fourth lens, AT45 is a distance on the optical axis from the image side surface of the fourth lens to the object side surface of the fifth lens, and AT56 is a distance on the optical axis from the image side surface of the fifth lens to the object side surface of the sixth lens. By setting the optical system to satisfy the above relationship, it is beneficial to balance the higher-order aberrations generated by the optical system, adjust the field curvature in engineering production, improve the imaging quality of the optical system, and reasonably control gaps between lenses, thereby improving imaging quality and assemblability. Furthermore, when the relationship of 3<AT45/(AT12+AT34+AT56)<4.9 is satisfied, the imaging quality of the optical system may be further improved.

In some embodiments, the optical system satisfies the relationship of 2.8<AT67/(AT12+AT34+AT56)<6.5, wherein AT12 is a distance on the optical axis from the image side surface of the first lens to the object side surface of the second lens, AT34 is a distance on the optical axis from the image side surface of the third lens to the object side surface of the fourth lens, AT56 is a distance on the optical axis from the image side surface of the fifth lens to the object side surface of the sixth lens, and AT67 is a distance on the optical axis from the image side surface of the sixth lens to the object side surface of the seventh lens. By setting the optical system to satisfy the above relationship, it is beneficial to balance the higher-order aberrations generated by the optical system, adjust the field curvature in engineering production, improve the imaging quality of the optical system, and reasonably control gaps between lenses, thereby improving imaging quality and assemblability. Furthermore, when the relationship of 3<AT67/(AT12+AT34+AT56)<6 is satisfied, the imaging quality of the optical system may be further improved.

In some embodiments, the optical system satisfies the relationship of 2.5<CT1/CT2<3.6, wherein CT1 is a thickness of the first lens on the optical axis, and CT2 is a thickness of the second lens on the optical axis. By setting the optical system to satisfy the above relationship, the second lens may be made thinner along the optical axis, thus becoming a key lens for correcting edge field distortion and improving imaging performance. In addition, the ratio of the thickness of the first lens to the thickness of the second lens on the optical axis is reasonably controlled, which helps to effectively balance the optical path difference of the optical system, reduce a size of the optical system, and maintain ultra-thin characteristics of the second lens. Furthermore, when the relationship of 2.6<CT1/CT2<3.5 is satisfied, the imaging quality of the optical system may be further improved.

In some embodiments, the optical system satisfies the relationship of 0.35<CT2/CT3<0.7, wherein CT2 is a thickness of the second lens on the optical axis, and CT3 is a thickness of the third lens on the optical axis. By setting the optical system to satisfy the above relationship, the second lens may be made thinner along the optical axis, thus becoming a key lens for correcting edge field distortion and improving imaging performance. In addition, the ratio of the thickness of the first lens to the thickness of the second lens on the optical axis is reasonably controlled, which helps to effectively balance the optical path difference of the optical system, reduce a size of the optical system, and maintain the ultra-thin characteristics of the third lens.

In some embodiments, the optical system satisfies the relationship of 1.1 <CT3/CT4<2.3, where CT3 is a thickness of the third lens on the optical axis, and CT4 is a thickness of the fourth lens on the optical axis. By setting the optical system to satisfy the above relationship, the fourth lens may be made thinner along the optical axis, thus becoming a key lens for correcting edge field distortion and improving imaging performance. In addition, the ratio of the thickness of the third lens to the thickness of the fourth lens on the optical axis is reasonably controlled, which helps to effectively balance the optical path difference of the optical system, reduce a size of the optical system, and maintain the ultra-thin characteristics of the fourth lens. Furthermore, when the relationship of 1.2<CT3/CT4<2.2 is satisfied, the imaging quality of the optical system may be further improved.

In some embodiments, the optical system satisfies the relationship of 0.4<CT4/CT5<2.5, wherein CT4 is a thickness of the fourth lens on the optical axis, and CT5 is a thickness of the fifth lens on the optical axis. By setting the optical system to satisfy the above relationship, the fifth lens may be made thinner along the optical axis, thus becoming a key lens for correcting edge field distortion and improving imaging performance. In addition, the ratio of the thickness of the fourth lens to the thickness of the fifth lens on the optical axis is reasonably controlled, which helps to effectively balance the optical path difference of the optical system, reduce a size of the optical system, and maintain the ultra-thin characteristics of the fifth lens. Furthermore, when the relationship of 0.45<CT4/CT5<2.3 is satisfied, the imaging quality of the optical system may be further improved.

In some embodiments, the optical system satisfies the relationship of 0.2<CT5/CT6<1.3, wherein CT5 is a thickness of the fifth lens on the optical axis, and CT6 is a thickness of the sixth lens on the optical axis. By setting the optical system to satisfy the above relationship, the sixth lens may be made thinner along the optical axis, thus becoming a key lens for correcting edge field distortion and improving imaging performance. In addition, the ratio of the thickness of the fifth lens to the thickness of the sixth lens on the optical axis is reasonably controlled, which helps to effectively balance the optical path difference of the optical system, reduce a size of the optical system, and maintain the ultra-thin characteristics of the sixth lens. The above relationship may ensure that size differences between lenses are not too large, which may be conducive to smooth transmission of expanded light, avoid excessive aberrations, and conducive to spatial arrangement of the lenses. Furthermore, when the relationship of 0.3<CT5/CT6<1.2 is satisfied, the imaging quality of the optical system may be further improved.

In some embodiments, the optical system satisfies the relationship of 1<CT6/CT7<1.8, wherein CT6 is a thickness of the sixth lens on the optical axis, and CT7 is a thickness of the seventh lens on the optical axis. By setting the optical system to satisfy the above relationship, the seventh lens may be made thinner along the optical axis, thus becoming a key lens for correcting edge field distortion and improving imaging performance. In addition, the ratio of the thickness of the sixth lens to the thickness of the seventh lens on the optical axis is reasonably controlled, which helps to effectively balance the optical path difference of the optical system, reduce a size of the optical system, maintain the ultra-thin characteristics of the seventh lens, reduce the overall thickness, and avoid reducing the yield rate due to an individual lens being too thin. Furthermore, when the relationship of 1.1<CT6/CT7<1.7 is satisfied, the imaging quality of the optical system may be further improved.

In some embodiments, the optical system satisfies the relationship of 1.1<SD51/SD42<1.5, wherein SD42 is half of a maximum effective aperture of the image side surface of the fourth lens, and SD51 is half of a maximum effective aperture of the object side surface of the fifth lens. By setting the optical system to satisfy the above relationship, deflection angle of the rays emitted from the fourth lens and then entering the fifth lens may be reduced, compatibility between the optical system and a photosensitive element may be improved, aberrations may be effectively corrected, overall image quality may be improved, and the assembly yield of the optical system may be improved.

In some embodiments, the optical system satisfies the relationship of 0.7<SD11/SD42<1.1, wherein SD11 is half of a maximum effective aperture of the object side surface of the first lens, and SD42 is half of a maximum effective aperture of the image side surface of the fourth lens. Since the first lens primarily functions to converge light, a larger aperture results in better light convergence. However, a larger aperture increases the overall size of the optical lens. When the above relationship is satisfied, it may be ensured that the apertures of the object side surface of the first lens and the image side surface of the fourth lens are within appropriate ranges. Thus, the aperture of the first lens may be reasonably controlled to give the optical system a large field of view, while reducing the viewpoint depth of the entire optical system. Furthermore, when the relationship of 0.8<SD11/SD42<1.05 is satisfied, the imaging quality of the optical system may be further improved.

In some embodiments, the optical system satisfies the relationship of 1.9<|SAG71/CT7|<2.6, wherein SAG71 is a distance along the optical axis from a position where the object side surface of the seventh lens has the maximum effective aperture to an intersection of the object side surface of the seventh lens and the optical axis, and CT7 is a thickness of the seventh lens on the optical axis. By setting the optical system to satisfy the above relationship, change in a sagittal height of the object side surface of the seventh lens can make the seventh lens U-shaped, thereby allowing the rays from lenses in front of the seventh lens to be accurately incident on the imaging plane at a small angle of incidence while maintaining uniform thickness of the seventh lens. Through the above relationship, the refractive power and thickness of the seventh lens may be reasonably configured, thereby reducing the aberrations introduced by the seventh lens, and thus helping to control the overall aberration of the optical system within a reasonable range.

In some embodiments, the optical system further includes a filter. The filter may be an infrared cutoff filter or an infrared bandpass filter. The infrared cutoff filter filters out infrared rays, and the infrared bandpass filter only allows the infrared rays to pass through. In the present application, the filter is an infrared cutoff filter having a fixed position relative to each lens of the optical system, and the infrared cutoff filter prevents the infrared rays, which may cause interference to normal imaging, from reaching the imaging plane of the optical system. The filter may function as a part of the optical system and be assembled together with each lens. In other embodiments, the filter may also be a component independent from the optical system, and the filter may be installed between the optical system and the image sensor during the assembly of the optical system and the image sensor. The filter may be made by coating on an optical glass. The infrared filter may also be a colored glass or made of other materials according to actual needs, which are not limited in the present application.

First embodiment

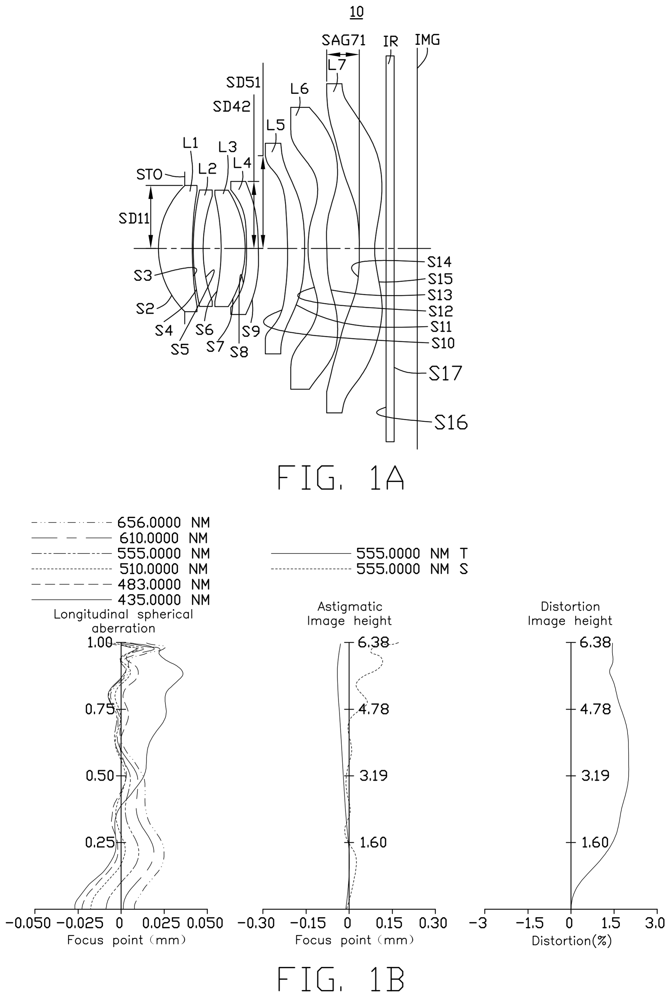

Referring to FIG. 1A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a negative focal power. The object side surface S8 of the fourth lens L4 is concave near the optical axis and is concave near the periphery thereof, and the image side surface S9 of the fourth lens L4 is convex near the optical axis and is convex near the periphery thereof. The fifth lens L5 has a positive focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 gradually changes from a convex surface near the optical axis to a concave surface near the periphery thereof, and the image side surface S13 of the sixth lens L6 gradually changes from a concave surface near the optical axis to a convex surface near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof. The image side surface S15 of the seventh lens L7 has at least one inflection point.

In addition, the optical system 10 further includes an aperture stop STO, a filter IR, and an imaging plane IMG. In the embodiment, the aperture stop STO is located at the object side of the first lens L1 to control the amount of incoming light entering the optical system 10. The filter **IR** is located between the seventh lens L7 and the imaging plane IMG, and the filter **IR** includes an object side surface S16 and an image side surface S17. The filter IR is an infrared cutoff filter to filter out infrared rays, such that only visible rays reach the imaging plane IMG. The infrared cutoff filter IR may be made of glass or plastic having a coating thereon. Each of the first lens L1 to the seventh lens L7 may be made of glass or plastic. An effective pixel area of the photosensitive element is located at the imaging plane IMG.

Table 1a shows various parameters of the optical system 10 of the embodiment, wherein Y radius is the radius of curvature of the object side surface or image side surface of the related surface numeral at the optical axis. The surface numerals S2 and S3 are the object side surface S2 and image side surface S3 of the first lens L1, respectively. That is, for a same lens, the surface with a smaller surface numeral is the object side surface, and the surface with a larger surface numeral is the image side surface. In a "thickness" column of each lens, the first value is the thickness of the lens at the optical axis, and the second value is the distance from the image side surface of the lens to the next surface at the optical axis. The focal length, the refractive index, and Abbe number are obtained by visible rays with a reference wavelength of 555 nm. The units of the Y radius, the thickness, and the focal length are mm.

Table 1a

| First embodiment | | | | | | | | | |
|---|---|---|---|---|---|---|---|---|---|
| EFL=6.51mm, FNO=1.68, FOV=85.64deg, TTL=8.04mm | | | | | | | | | |
| Surface numeral | Surface name | Surface type | Y radius | Thickness | Material | refractive index | Abbe number | Focal length | Effective semi-diameter |
| | object side | sphere | infinity | infinity | | | | | |
| STO | aperture stop | sphere | infinity | -0.789 | | | | | 1.938 |
| S2 | first lens | asphere | 2.899 | 1.005 | plastic | 1.546 | 55.932 | 6.65 | 1.938 |
| S3 | | asphere | 12.590 | 0.030 | | | | | 1.819 |
| S4 | second lens | asphere | 6.934 | 0.303 | plastic | 1.666 | 20.370 | -18.91 | 1.780 |
| S5 | | asphere | 4.395 | 0.579 | | | | | 1.622 |
| S6 | third lens | asphere | -27.294 | 0.750 | plastic | 1.537 | 55.685 | 14.55 | 1.613 |
| S7 | | asphere | -6.130 | 0.054 | | | | | 1.767 |
| S8 | fourth lens | asphere | -9.288 | 0.356 | plastic | 1.677 | 19.239 | -29.38 | 1.784 |
| S9 | | asphere | -17.696 | 0.937 | | | | | 2.021 |
| S10 | fifth lens | asphere | -10.803 | 0.527 | plastic | 1.570 | 37.400 | 56.58 | 2.816 |
| S11 | | asphere | -8.235 | 0.112 | | | | | 3.214 |
| S12 | sixth lens | asphere | 4.325 | 0.573 | plastic | 1.537 | 55.685 | 9.75 | 3.870 |
| S13 | | asphere | 23.850 | 1.021 | | | | | 4.305 |
| S14 | seventh lens | asphere | -51.458 | 0.500 | plastic | 1.537 | 55.685 | -4.86 | 4.792 |
| S15 | | asphere | 2.755 | 0.360 | | | | | 4.998 |
| S16 | filter IR | sphere | infinity | 0.210 | glass | 1.518 | 64.197 | | 6.120 |
| S17 | | sphere | infinity | 0.721 | | | | | 6.120 |
| IMG | imaging plane | sphere | infinity | 0.000 | | | | | 6.382 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

In the embodiment, object side surfaces and the image side surfaces of the first lens L1 to the seventh lens L7 are all aspherical surfaces. The surface shape x of aspherical surface may be expressed by, but not limited to, the following aspherical formula:

$$x = \frac{ch^2}{1 + \sqrt{1 - (k+1)c^2h^2}} + \sum Aih^i$$

Wherein, x is a distance from a corresponding point of the aspherical surface to a plane tangent to the vertex, h is a distance from any point on the aspherical surface to the optical axis, c is a curvature of a vertex of the aspherical surface, k is cone constant, and Ai is a coefficient corresponding to the ith higher-order term in the above aspherical formula. Table 1b shows the coefficients of high-order terms A4, A6, A8, A10, A12, A14, A16, A18, A20, A22, A24, A26, A28, A30 of the aspheric mirrors S2, S3, S4, S5, S6, S7, S8, S9, S10, S11, S12, S13, S14, S15 that may be used in the first embodiment.

Table 1b

| First embodiment | | | | | | |
|---|---|---|---|---|---|---|
| Aspheric Coefficients | | | | | | |
| Surface numeral | 2 | 3 | 4 | 5 | 6 | 7 | 8 |
| K | -3.4949E-03 | 1.1443E+00 | -3.5630E-01 | 1.6069E-01 | 9.2057E+00 | 6.0535E-01 | -8.1321E-01 |
| A4 | 2.5278E-03 | -3.4791E-04 | -6.6974E-03 | -6.8355E-04 | -1.0078E-02 | -7.7154E-03 | -8.9219E-03 |
| A6 | -1.7796E-03 | -1.0800E-02 | -1.4212E-02 | -2.5444E-02 | -1.2662E-03 | 7.4663E-03 | -2.7791E-02 |
| A8 | 1.7913E-03 | 2.5127E-02 | 3.2440E-02 | 6.7843E-02 | -4.2562E-03 | -2.6132E-01 | -1.2793E-01 |
| A10 | -6.8447E-04 | -2.6755E-02 | -3.5189E-02 | -1.0320E-01 | 7.6496E-03 | 1.0285E+00 | 6.3361E-01 |
| A12 | 9.0247E-05 | 1.6612E-02 | 2.2658E-02 | 9.7054E-02 | -8.2863E-03 | -2.2792E+00 | **-1.4490E+00** |
| A14 | 3.5494E-05 | -6.2163E-03 | -8.8159E-03 | -5.6824E-02 | 4.9109E-03 | 3.3265E+00 | 2.0959E+00 |
| A16 | -1.7412E-05 | 1.3659E-03 | 2.0145E-03 | 2.0227E-02 | -1.5523E-03 | -3.3712E+00 | -2.0730E+00 |
| A18 | 3.1432E-06 | -1.6048E-04 | -2.4495E-04 | -4.0119E-03 | 2.2893E-04 | 2.4258E+00 | 1.4449E+00 |
| A20 | -2.3598E-07 | 7.6670E-06 | 1.2044E-05 | 3.4156E-04 | -9.5024E-06 | -1.2471E+00 | -7.1656E-01 |
| A22 | 0.0000E+00 | 0.0000E+00 | 0.0000E+00 | 0.0000E+00 | 0.0000E+00 | 4.5470E-01 | 2.5143E-01 |
| A24 | 0.0000E+00 | 0.0000E+00 | 0.0000E+00 | 0.0000E+00 | 0.0000E+00 | -1.1480E-01 | -6.1002E-02 |
| A26 | 0.0000E+00 | 0.0000E+00 | 0.0000E+00 | 0.0000E+00 | 0.0000E+00 | 1.9080E-02 | 9.7358E-03 |
| A28 | 0.0000E+00 | 0.0000E+00 | 0.0000E+00 | 0.0000E+00 | 0.0000E+00 | -1.8775E-03 | -9.1963E-04 |
| A30 | 0.0000E+00 | 0.0000E+00 | 0.0000E+00 | 0.0000E+00 | 0.0000E+00 | 8.2854E-05 | 3.8955E-05 |
| Surface numeral | 9 | 10 | 11 | 12 | 13 | 14 | 15 |
| K | -4.0853E+00 | 7.3832E-01 | -1.3696E+00 | -4.2056E-04 | 1.3823E+00 | 1.7695E+01 | -9.1403E+00 |
| A4 | 3.9221E-03 | 7.1407E-03 | 2.6694E-02 | 8.2296E-02 | 8.6253E-02 | -3.9717E-02 | -1.5932E-02 |
| A6 | -8.8717E-02 | 6.0796E-03 | -5.7176E-02 | -1.0086E-01 | -3.2164E-02 | 1.3228E-03 | -7.3592E-03 |
| A8 | 2.4049E-01 | -1.1706E-02 | 3.6603E-02 | 6.9402E-02 | 5.9083E-04 | 3.1586E-03 | 6.2155E-03 |
| A10 | -4.6270E-01 | 9.3624E-03 | -8.0074E-03 | -3.6649E-02 | 3.1059E-03 | -1.0938E-03 | -2.3849E-03 |
| A12 | 6.1874E-01 | -5.9100E-03 | -4.6390E-03 | 1.4014E-02 | -1.2429E-03 | 2.2215E-04 | 5.9038E-04 |
| A14 | -5.8518E-01 | 3.1624E-03 | 4.7054E-03 | -3.8127E-03 | 2.7386E-04 | -3.3349E-05 | -1.0137E-04 |
| A16 | 3.9848E-01 | -1.3501E-03 | -2.0136E-03 | 7.4048E-04 | -4.0512E-05 | 3.8063E-06 | 1.2387E-05 |

EP 4 682 610 A2

| Surface numeral | 9 | 10 | 11 | 12 | 13 | 14 | 15 |
|---|---|---|---|---|---|---|---|
| A18 | -1.9743E-01 | 4.3201E-04 | 5.3090E-04 | -1.0326E-04 | 4.2780E-06 | -3.2316E-07 | -1.0885E-06 |
| A20 | 7.1240E-02 | -1.0058E-04 | -9.3464E-05 | 1.0342E-05 | -3.2945E-07 | 1.9930E-08 | 6.8847E-08 |
| A22 | -1.8526E-02 | 1.6707E-05 | 1.1214E-05 | -7.3713E-07 | 1.8490E-08 | -8.7395E-10 | -3.1021E-09 |
| A24 | 3.3818E-03 | -1.9223E-06 | -9.0776E-07 | 3.6470E-08 | -7.4038E-10 | 2.6481E-11 | 9.7059E-11 |
| A26 | -4.1111E-04 | 1.4508E-07 | 4.7509E-08 | -1.1905E-09 | 2.0107E-11 | -5.2710E-13 | -2.0026E-12 |
| A28 | 2.9882E-05 | -6.4404E-09 | -1.4533E-09 | 2.3056E-11 | -3.3231E-13 | 6.2123E-15 | 2.4489E-14 |
| A30 | -9.8234E-07 | 1.2712E-10 | 1.9750E-11 | -2.0067E-13 | 2.5219E-15 | -3.2941E-17 | -1.3437E-16 |

From the left image in FIG. 1B, a longitudinal spherical aberration diagram of the optical system 10 in the first embodiment at wavelengths of 656.0000 nm, 610.0000 nm, 555.0000 nm, 510.0000 nm, 483.0000 nm, and 435.0000 nm is shown. The horizontal coordinate along the X-axis represents the deviation of the focus point in mm, that is, the distance from the imaging plane IMG to the intersection of the rays and the optical axis. The vertical coordinate along the Y-axis represents the normalized field of view. The longitudinal spherical aberration diagram represents the deviation of the focus point when the rays with different wavelengths travel through the lenses of the optical system 10. From the left image of FIG. 1B, the deviation of the focus point of the rays with different wavelengths in the first embodiment are almost the same. Thus, the diffuse spots or chromatic halos in the images are suppressed, indicating that the imaging quality of the optical system 10 in the embodiment is good.

From the middle image of FIG. 1B, an astigmatism diagram of the optical system 10 in the first embodiment at a wavelength of 555.0000 nm is shown. The horizontal coordinate along the X-axis represents the deviation of the focus point in mm. The vertical coordinate along the Y-axis represents the image heigh in mm. The S curve of the astigmatism diagram represents the curvature in the sagittal direction at 555.0000 nm, and the T curve of the astigmatism diagram represents the curvature in the tangential direction at 555.0000 nm. From the middle image of FIG. 1B, the field curvature of the optical system 10 is small, the field curvature and astigmatism of each field of view have been corrected, and the central and marginal fields have clear images.

From the right image of FIG. 1B, a distortion diagram of the optical system 10 in the first embodiment at different focal lengths and at a wavelength of 555.0000 nm is shown. The horizontal coordinate along the X-axis represents the distortion (%), and the vertical coordinate along the Y-axis represents the image height in mm. The distortion curve represents the magnitude of distortion corresponding to different field of views. From the right image of FIG. 1B, under the wavelength of 555.0000nm, the distortion of the images caused by the main rays is small, and the imaging quality of the optical system 100 is good.

From FIG. 1B, the optical system 10 of the embodiment has small aberration and good imaging quality.

Second embodiment

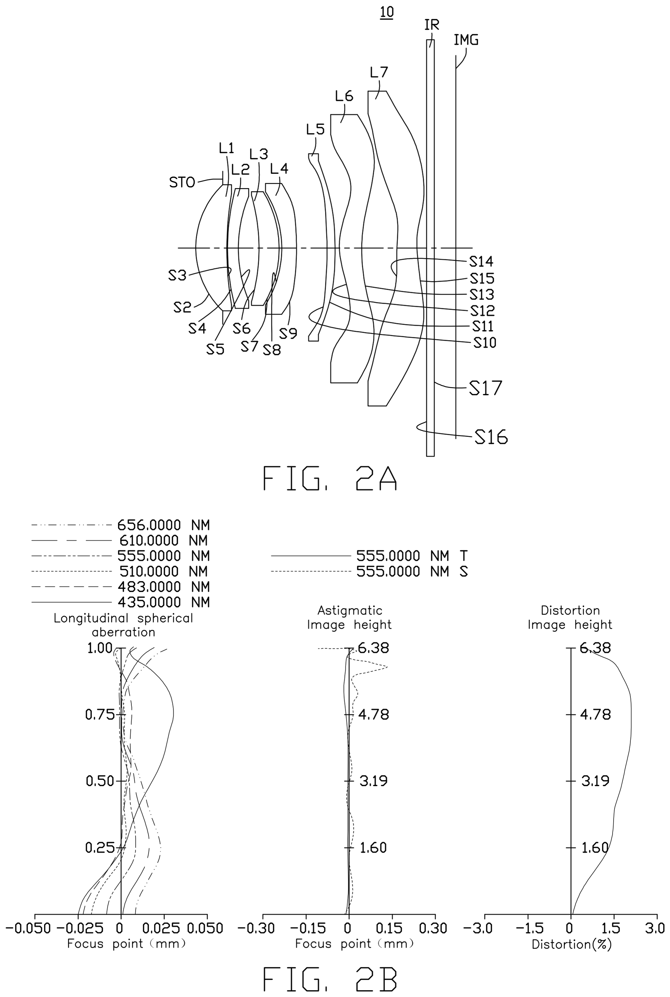

Referring to FIG. 2A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a negative focal power. The object side surface S8 of the fourth lens L4 is concave near the optical axis and is concave near the periphery thereof, and the image side surface S9 of the fourth lens L4 is convex near the optical axis and is convex near the periphery thereof. The fifth lens L5 has a negative focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 2a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 2a

| | | | | | Second embodiment | | | | |
| --- | --- | --- | --- | --- | --- | --- | --- | --- | --- |
| | | | | EFL=6.68mm, FNO=1.68, FOV=84.33deg, TTL=8.18mm | | | | | |
| Surface numeral | Surface name | Surface type | Y radius | Thickness | Material | refractive index | Abbe number | Focal length | Effective semi-diameter |
| | object side | sphere | infinity | infinity | | | | | |
| STO | aperture stop | sphere | infinity | -0.833 | | | | | 1.988 |
| S2 | first lens | asphere | 2.903 | 0.939 | plastic | 1.546 | 55.932 | 6.86 | 1.988 |
| S3 | | asphere | 11.410 | 0.030 | | | | | 1.906 |
| S4 | second lens | asphere | 6.751 | 0.327 | plastic | 1.666 | 20.370 | -19.94 | 1.857 |
| S5 | | asphere | 4.390 | 0.656 | | | | | 1.670 |
| S6 | third lens | asphere | -21.269 | 0.629 | plastic | 1.537 | 55.685 | 14.73 | 1.676 |
| S7 | | asphere | -5.822 | 0.064 | | | | | 1.777 |
| S8 | fourth lens | asphere | -8.621 | 0.481 | plastic | 1.677 | 19.239 | -28.46 | 1.783 |
| S9 | | asphere | -15.951 | 0.993 | | | | | 2.040 |
| S10 | fifth lens | asphere | -10.330 | 0.225 | plastic | 1.639 | 23.630 | -49.49 | 2.823 |
| S11 | | asphere | -15.419 | 0.168 | | | | | 2.916 |
| S12 | sixth lens | asphere | 3.791 | 0.719 | plastic | 1.557 | 40.642 | 7.98 | 3.623 |
| S13 | | asphere | 23.321 | 1.111 | | | | | 4.194 |
| S14 | seventh lens | asphere | -71.142 | 0.617 | plastic | 1.537 | 55.685 | -5.22 | 4.543 |
| S15 | | asphere | 2.927 | 0.317 | | | | | 4.921 |
| S16 | filter IR | sphere | infinity | 0.210 | glass | 1.518 | 64.197 | | 6.866 |
| S17 | | sphere | infinity | 0.693 | | | | | 6.866 |
| IMG | imaging plane | sphere | infinity | 0.000 | | | | | 6.384 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 2b shows the coefficients of high-order terms that may be used for each aspherical mirror surface in the second embodiment, wherein each aspherical surface shape may be defined by the formula provided in the first embodiment.

Table 2b

| | | | | Second embodiment | | | |
| --- | --- | --- | --- | --- | --- | --- | --- |
| | | | | Aspheric Coefficients | | | |
| Surface numeral | 2 | 3 | 4 | 5 | 6 | 7 | 8 |
| K | -2.9753E-02 | -3.6819E+00 | 6.9732E-02 | 4.3092E-01 | 6.7630E+01 | 7.8852E-01 | -4.7751E+00 |
| A4 | 3.4080E-04 | -7.0482E-03 | -1.4882E-02 | -7.4651E-03 | -1.1685E-02 | -7.8770E-03 | -8.7058E-03 |
| A6 | 4.1114E-03 | 1.0955E-02 | 1.1542E-02 | 2.1344E-03 | 5.2431E-03 | -2.7406E-03 | -2.6789E-02 |
| A8 | -6.2873E-03 | -1.0383E-02 | -1.1930E-02 | -1.6916E-03 | -1.9130E-02 | -1.0422E-01 | -5.4883E-03 |

(continued)

| Second embodiment | | | | | | | |
| --- | --- | --- | --- | --- | --- | --- | --- |
| Aspheric Coefficients | | | | | | | |
| Surface numeral | 2 | 3 | 4 | 5 | 6 | 7 | 8 |
| A10 | 6.5384E-03 | 7.1505E-03 | 1.0267E-02 | 2.0146E-03 | 2.5845E-02 | 3.1845E-01 | 4.8273E-02 |
| A12 | -4.2481E-03 | -3.1945E-03 | -5.8632E-03 | -9.0102E-04 | -2.0885E-02 | -5.2392E-01 | -3.7333E-02 |
| A14 | 1.7496E-03 | 8.5603E-04 | 2.1498E-03 | -4.4323E-05 | 1.0319E-02 | 5.5890E-01 | -4.4259E-02 |
| A16 | -4.4164E-04 | -1.1954E-04 | -4.7813E-04 | 2.3006E-04 | -3.0303E-03 | -4.0648E-01 | 1.2428E-01 |
| A18 | 6.2355E-05 | 5.5868E-06 | 5.9100E-05 | -8.6185E-05 | 4.8479E-04 | 2.0417E-01 | -1.3303E-01 |
| A20 | -3.7836E-06 | 1.6132E-07 | -3.1610E-06 | 1.0899E-05 | -3.2508E-05 | -6.9944E-02 | 8.5370E-02 |
| A22 | 0.0000E+00 | 0.0000E+00 | 0.0000E+00 | 0.0000E+00 | 0.0000E+00 | 1.5567E-02 | -3.5836E-02 |
| A24 | 0.0000E+00 | 0.0000E+00 | 0.0000E+00 | 0.0000E+00 | 0.0000E+00 | -1.9547E-03 | 9.9599E-03 |
| A26 | 0.0000E+00 | 0.0000E+00 | 0.0000E+00 | 0.0000E+00 | 0.0000E+00 | 6.2335E-05 | -1.7730E-03 |
| A28 | 0.0000E+00 | 0.0000E+00 | 0.0000E+00 | 0.0000E+00 | 0.0000E+00 | 1.4890E-05 | 1.8359E-04 |
| A30 | 0.0000E+00 | 0.0000E+00 | 0.0000E+00 | 0.0000E+00 | 0.0000E+00 | -1.4277E-06 | -8.4259E-06 |
| Surface numeral | 9 | 10 | 11 | 12 | 13 | 14 | 15 |
| K | -3.1680E+01 | -2.0863E+01 | -3.5456E+00 | -8.6403E-02 | 1.8102E+01 | 1.1411E+01 | -8.7326E+00 |
| A4 | -7.9915E-03 | 2.3566E-02 | 6.6637E-02 | 9.1186E-02 | 7.4741E-02 | -3.6165E-02 | -1.7910E-02 |
| A6 | -1.1396E-02 | -3.1801E-03 | -1.1779E-01 | -1.3030E-01 | -2.7421E-02 | 2.0686E-04 | -3.0027E-03 |
| A8 | 1.6771E-02 | -5.0171E-02 | 7.0018E-02 | 9.8715E-02 | 9.1507E-05 | 4.0408E-03 | 3.4180E-03 |
| A10 | -4.1289E-02 | 8.6137E-02 | -4.4226E-03 | -5.3923E-02 | 3.0062E-03 | -2.0789E-03 | -1.3865E-03 |
| A12 | 7.7384E-02 | -7.7067E-02 | -2.2017E-02 | 2.1105E-02 | -1.1917E-03 | 6.8121E-04 | 3.5398E-04 |
| A14 | -9.5712E-02 | 4.4298E-02 | 1.7345E-02 | -5.9148E-03 | 2.5979E-04 | -1.4972E-04 | -6.1682E-05 |
| A16 | 8.0108E-02 | -1.7527E-02 | -7.2501E-03 | 1.1923E-03 | -3.7472E-05 | 2.2286E-05 | 7.5635E-06 |
| A18 | -4.6634E-02 | 4.9166E-03 | 1.9612E-03 | -1.7351E-04 | 3.7849E-06 | -2.2894E-06 | -6.6280E-07 |
| A20 | 1.9127E-02 | -9.8816E-04 | -3.6244E-04 | 1.8207E-05 | -2.7253E-07 | 1.6440E-07 | 4.1680E-08 |
| A22 | -5.5129E-03 | 1.4159E-04 | 4.6321E-05 | -1.3631E-06 | 1.3941E-08 | -8.2478E-09 | -1.8654E-09 |
| A24 | 1.0934E-03 | -1.4138E-05 | -4.0372E-06 | 7.0990E-08 | -4.9554E-10 | 2.8378E-10 | 5.7980E-11 |
| A26 | -1.4214E-04 | 9.3549E-07 | 2.2946E-07 | -2.4437E-09 | 1.1659E-11 | -6.3905E-12 | -1.1892E-12 |
| A28 | 1.0907E-05 | -3.6873E-08 | -7.6774E-09 | 4.9994E-11 | -1.6393E-13 | 8.4937E-14 | 1.4468E-14 |
| A30 | -3.7454E-07 | 6.5528E-10 | 1.1484E-10 | -4.6043E-13 | 1.0498E-15 | -5.0570E-16 | -7.9067E-17 |

From the left image, the middle image, the right image of FIG. 2B, a longitudinal spherical aberration diagram, an astigmatism diagram, and a distortion diagram of the optical system 10 in the second embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 2B, the longitudinal spherical aberration, the field curvature, and the distortion of the optical system 10 have been controlled, such that the optical system 10 of the embodiment has good imaging quality.

Third embodiment

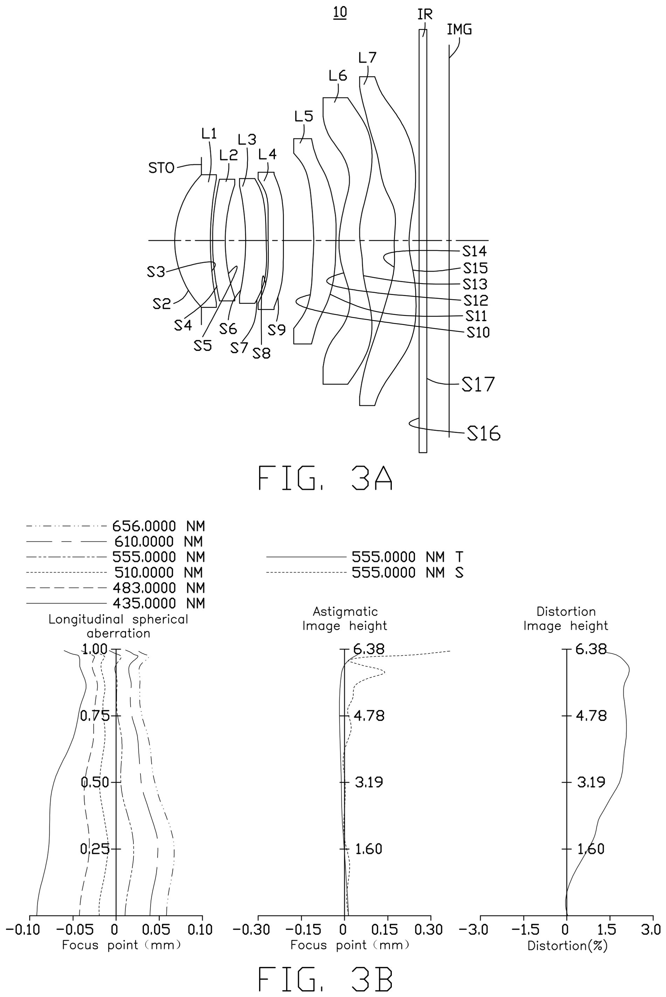

Referring to FIG. 3A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a negative focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a positive focal power. The object side surface S8 of the fourth lens L4 is convex near the optical axis and is concave near the periphery thereof, and the image side surface S9 of the fourth lens L4 is convex near the optical axis and is convex near the periphery thereof. The fifth lens L5 has a positive focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 3a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 3a

| Third embodiment | | | | | | | | | |
|---|---|---|---|---|---|---|---|---|---|
| EFL=6.74mm, FNO=1.682, FOV=83.5deg, TTL=8.30mm | | | | | | | | | |
| Surface numeral | Surface name object side | Surface type sphere | Y radius infinity | Thickness infinity | Material | refractive index | Abbe number | Focal length | Effective semi-diameter |
| STO | aperture stop | sphere | infinity | -0.800 | | | | | 2.004 |
| S2 | first lens | asphere | 2.989 | 1.091 | plastic | 1.546 | 55.932 | 7.12 | 2.004 |
| S3 | | asphere | 11.272 | 0.054 | | | | | 1.863 |
| S4 | second lens | asphere | 8.280 | 0.380 | plastic | 1.666 | 20.370 | -26.72 | 1.832 |
| S5 | | asphere | 5.548 | 0.605 | | | | | 1.686 |
| S6 | third lens | asphere | -26.539 | 0.634 | plastic | 1.535 | 55.790 | -94.11 | 1.694 |
| S7 | | asphere | -56.383 | 0.050 | | | | | 1.862 |
| S8 | fourth lens | asphere | 29.186 | 0.479 | plastic | 1.677 | 19.239 | 26.66 | 1.879 |
| S9 | | asphere | -46.972 | 0.892 | | | | | 2.075 |
| S10 | fifth lens | asphere | -10.999 | 0.692 | plastic | 1.558 | 40.528 | 100.99 | 2.616 |
| S11 | | asphere | -9.419 | 0.100 | | | | | 3.093 |
| S12 | sixth lens | asphere | 4.305 | 0.623 | plastic | 1.537 | 54.000 | 9.83 | 3.798 |
| S13 | | asphere | 21.817 | 1.077 | | | | | 4.298 |
| S14 | seventh lens | asphere | -52.391 | 0.416 | plastic | 1.537 | 55.685 | -4.92 | 4.690 |
| S15 | | asphere | 2.790 | 0.311 | | | | | 4.938 |

(continued)

| Third embodiment | | | | | | | | | |
|---|---|---|---|---|---|---|---|---|---|
| EFL=6.74mm, FNO=1.682, FOV=83.5deg, TTL=8.30mm | | | | | | | | | |
| Surface numeral | Surface name object side | Surface type sphere | Y radius infinity | Thickness infinity | Material | refractive index | Abbe number | Focal length | Effective semi-diameter |
| S16 | filter IR | sphere | infinity | 0.210 | glass | 1.518 | 64.197 | | 6.832 |
| S17 | | sphere | infinity | 0.685 | | | | | 6.832 |
| IMG | imaging plane | sphere | infinity | 0.000 | | | | | 6.350 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 3b shows the coefficients of high-order terms that may be used for each aspherical mirror surface in the third embodiment, wherein each aspherical surface shape may be defined by the formula provided in the first embodiment.

Table 3b

| Third embodiment | | | | | | | |
|---|---|---|---|---|---|---|---|
| Aspheric Coefficients | | | | | | | |
| Surface numeral | 2 | 3 | 4 | 5 | 6 | 7 | 8 |
| K | -3.7052E-02 | -5.5726E+00 | 1.0055E+00 | 3.7338E-01 | -9.9000E+01 | 9.9000E+01 | -8.4715E+01 |
| A4 | 1.4633E-03 | 4.4067E-04 | -5.5726E-03 | -4.2665E-03 | -5.2110E-03 | 3.4343E-04 | -1.6813E-02 |
| A6 | -9.7170E-04 | -9.7397E-03 | -9.8011E-03 | -8.1990E-04 | -1.5699E-02 | -3.5530E-02 | 1.9690E-02 |
| A8 | 2.2701E-03 | 1.7294E-02 | 1.8477E-02 | 1.4921E-03 | 2.7664E-02 | 7.6011E-03 | -1.2082E-01 |
| A10 | -2.0898E-03 | -1.6571E-02 | -1.8263E-02 | -8.4600E-04 | -3.4734E-02 | 2.3241 E-02 | 2.2061E-01 |
| A12 | 1.1260E-03 | 1.0165E-02 | 1.1722E-02 | 7.6724E-04 | 2.7350E-02 | -2.8375E-02 | -2.4361E-01 |
| A14 | -3.5455E-04 | -3.9792E-03 | -4.8090E-03 | -6.5429E-04 | -1.3577E-02 | 1.6111E-02 | 1.8406E-01 |
| A16 | 6.3577E-05 | 9.4990E-04 | 1.2041E-03 | 3.4930E-04 | 4.1402E-03 | -5.1012E-03 | -9.8495E-02 |
| A18 | -5.7672E-06 | -1.2490E-04 | -1.6588E-04 | -9.6469E-05 | -7.1059E-04 | 8.5940E-04 | 3.7429E-02 |
| A20 | 1.8222E-07 | 6.8819E-06 | 9.6037E-06 | 1.1019E-05 | 5.2856E-05 | -5.9769E-05 | -9.8878E-03 |
| A22 | 0.0000E+00 | 0.0000E+00 | 0.0000E+00 | 0.0000E+00 | 0.0000E+00 | 0.0000E+00 | 1.7232E-03 |
| A24 | 0.0000E+00 | 0.0000E+00 | 0.0000E+00 | 0.0000E+00 | 0.0000E+00 | 0.0000E+00 | -1.7738E-04 |
| A26 | 0.0000E+00 | 0.0000E+00 | 0.0000E+00 | 0.0000E+00 | 0.0000E+00 | 0.0000E+00 | 8.1260E-06 |
| Surface numeral | 9 | 10 | 11 | 12 | 13 | 14 | 15 |
| K | -9.9000E+01 | -6.3138E-01 | -1.7276E-01 | -2.0806E-02 | 9.6236E-01 | 5.7447E+01 | -1.0585E+01 |
| A4 | -1.1069E-02 | 1.1603E-02 | 3.4032E-02 | 7.2716E-02 | 7.0955E-02 | -4.8417E-02 | -2.7147E-02 |
| A6 | 5.7988E-03 | -8.7698E-03 | -6.7636E-02 | -8.2096E-02 | -1.6031E-02 | 1.3674E-02 | 6.8105E-03 |
| A8 | -1.8241E-02 | 1.0134E-02 | 5.0524E-02 | 5.1046E-02 | -8.9506E-03 | -2.9533E-03 | -1.8697E-03 |
| A10 | 1.7532E-02 | -1.0720E-02 | -2.3063E-02 | -2.4912E-02 | 6.9441E-03 | 4.1697E-04 | 4.4851E-04 |
| A12 | -9.6730E-03 | 7.1960E-03 | 6.8089E-03 | 9.0365E-03 | -2.3395E-03 | 2.6128E-05 | -8.0069E-05 |
| A14 | 3.3417E-03 | -3.1746E-03 | -1.1916E-03 | -2.3677E-03 | 5.0034E-04 | -2.4888E-05 | 1.0580E-05 |

(continued)

| Surface numeral | 9 | 10 | 11 | 12 | 13 | 14 | 15 |
|---|---|---|---|---|---|---|---|
| A16 | -7.1294E-04 | 9.4618E-04 | 5.6523E-05 | 4.4622E-04 | -7.4581E-05 | 5.2122E-06 | -1.0850E-06 |
| A18 | 8.5747E-05 | -1.9193E-04 | 2.9427E-05 | -6.0630E-05 | 8.0127E-06 | -6.1641E-07 | 8.8884E-08 |
| A20 | -4.4030E-06 | 2.6072E-05 | -9.0515E-06 | 5.9362E-06 | -6.2579E-07 | 4.7162E-08 | -5.7362E-09 |
| A22 | 0.0000E+00 | -2.2610E-06 | 1.3812E-06 | -4.1484E-07 | 3.5234E-08 | -2.4276E-09 | 2.7905E-10 |
| A24 | 0.0000E+00 | 1.1260E-07 | -1.3124E-07 | 2.0191E-08 | -1.3935E-09 | 8.3894E-11 | -9.6694E-12 |
| A26 | 0.0000E+00 | -2.4370E-09 | 7.8742E-09 | -6.5057E-10 | 3.6723E-11 | -1.8726E-12 | 2.2230E-13 |
| A28 | 0.0000E+00 | 0.0000E+00 | -2.7491E-10 | 1.2481E-11 | -5.7874E-13 | 2.4444E-14 | -3.0182E-15 |
| A30 | 0.0000E+00 | 0.0000E+00 | 4.2730E-12 | -1.0798E-13 | 4.1237E-15 | -1.4195E-16 | 1.8257E-17 |

From the left image, the middle image, the right image of FIG. 3B, a longitudinal spherical aberration diagram, an astigmatism diagram, and a distortion diagram of the optical system 10 in the third embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 3B, the longitudinal spherical aberration, the field curvature, and the distortion of the optical system 10 have been controlled, such that the optical system 10 of the embodiment has good imaging quality.

Fourth embodiment

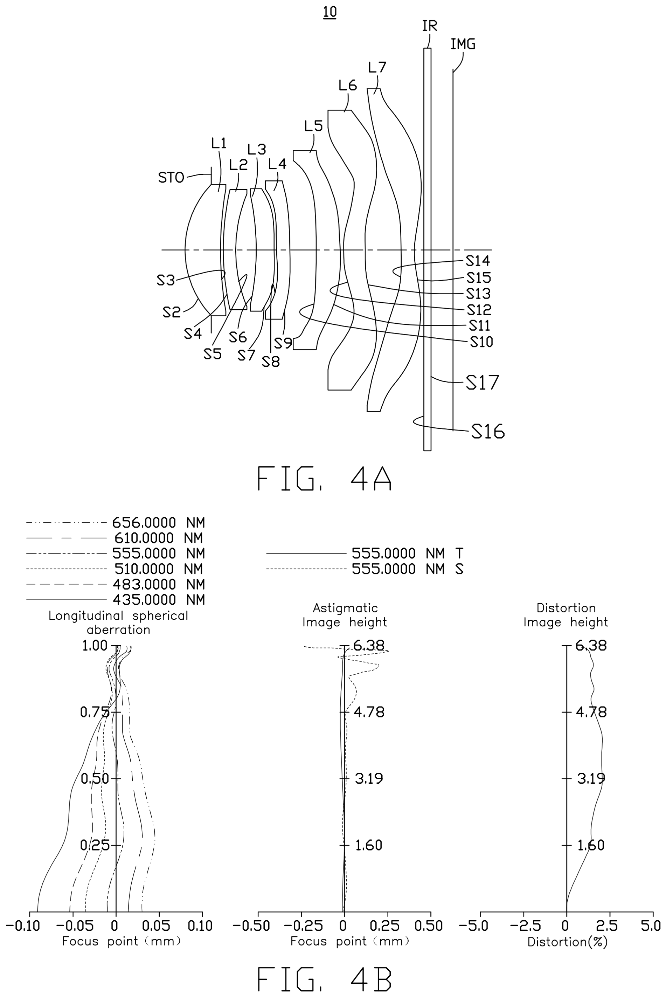

Referring to FIG. 4A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a positive focal power. The object side surface S8 of the fourth lens L4 is convex near the optical axis and is concave near the periphery thereof, and the image side surface S9 of the fourth lens L4 is concave near the optical axis and is convex near the periphery thereof. The fifth lens L5 has a positive focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 4a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 4a

| Fourth embodiment | | | | | | | | | |
|---|---|---|---|---|---|---|---|---|---|
| EFL=6.89mm, FNO=1.68, FOV=82.50deg, TTL=8.42mm | | | | | | | | | |
| Surface numeral | Surface name object side | Surface type sphere | Y radius infinity | Thickness infinity | Material | refractive index | Abbe number | Focal length | Effective semi-diameter |
| STO | aperture stop | sphere | infinity | -0.828 | | | | | 2.050 |
| S2 | first lens | asphere | 2.992 | 1.113 | plastic | 1.546 | 55.932 | 6.95 | 2.050 |
| S3 | | asphere | 12.277 | 0.072 | | | | | 1.913 |
| S4 | second lens | asphere | 7.978 | 0.387 | plastic | 1.666 | 20.370 | -23.02 | **1.866** |
| S5 | | asphere | 5.147 | 0.643 | | | | | 1.753 |
| S6 | third lens | asphere | -29.345 | 0.594 | plastic | 1.536 | 55.263 | 445.97 | 1.773 |
| S7 | | asphere | -26.329 | 0.050 | | | | | 1.906 |
| S8 | fourth lens | asphere | 33.588 | 0.416 | plastic | 1.677 | 19.239 | 56.86 | 1.929 |
| S9 | | asphere | 262.226 | 0.863 | | | | | 2.145 |
| S10 | fifth lens | asphere | -11.246 | 0.738 | plastic | 1.535 | 55.790 | 107.35 | 2.787 |
| S11 | | asphere | -9.625 | 0.111 | | | | | 3.101 |
| S12 | sixth lens | asphere | 4.385 | 0.667 | plastic | 1.535 | 55.790 | 9.89 | 3.822 |
| S13 | | asphere | 23.896 | 1.150 | | | | | 4.349 |
| S14 | seventh lens | asphere | -58.895 | 0.409 | plastic | 1.537 | 55.685 | -5.18 | 4.846 |
| S15 | | asphere | 2.925 | 0.308 | | | | | 5.031 |
| S16 | filter IR | sphere | infinity | 0.210 | glass | 1.518 | 64.197 | | 6.969 |
| S17 | | sphere | infinity | 0.689 | | | | | 6.969 |
| IMG | imaging plane | sphere | infinity | 0.000 | | | | | 6.342 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 4b shows the coefficients of high-order terms that may be used for each aspherical mirror surface in the fourth embodiment, wherein each aspherical surface shape may be defined by the formula provided in the first embodiment.

Table 4b

| Fourth embodiment | | | | | | | |
|---|---|---|---|---|---|---|---|
| Aspheric Coefficients | | | | | | | |
| Surface numeral | 2 | 3 | 4 | 5 | 6 | 7 | 8 |
| K | -6.4269E-02 | -8.9473E+00 | 8.5043E-01 | 6.7244E-01 | -6.7782E+01 | 8.4254E+01 | -9.9000E+01 |
| A4 | 2.9725E-04 | -2.7834E-03 | -8.7253E-03 | -3.7396E-03 | -7.1967E-03 | -3.5053E-02 | -1.5297E-02 |
| A6 | 1.6954E-03 | -1.1452E-03 | 8.8446E-04 | -2.7361E-03 | -2.5212E-03 | 5.9979E-02 | -6.3401E-02 |
| A8 | -1.6601E-03 | 5.3628E-03 | 2.9166E-03 | 8.3935E-03 | 1.3164E-03 | -1.1662E-01 | 2.7547E-01 |
| A10 | 1.1279E-03 | -5.9494E-03 | -3.8535E-03 | -1.1293E-02 | -2.4573E-03 | 1.2018E-01 | -7.3199E-01 |

(continued)

| Fourth embodiment | | | | | | | |
| Aspheric Coefficients | | | | | | | |
| Surface numeral | 2 | 3 | 4 | 5 | 6 | 7 | 8 |
| A12 | -4.5913E-04 | 3.7001E-03 | 2.7096E-03 | 9.3860E-03 | 2.3708E-03 | -7.5331E-02 | 1.2247E+00 |
| A14 | 1.1517E-04 | -1.3811E-03 | -1.0995E-03 | -4.8474E-03 | -1.4120E-03 | 2.9810E-02 | -1.3938E+00 |
| A16 | -1.6988E-05 | 3.0461E-04 | 2.5586E-04 | 1.5399E-03 | 5.2733E-04 | -7.2880E-03 | 1.1256E+00 |
| A18 | 1.3201E-06 | -3.6351E-05 | -3.1001E-05 | -2.7707E-04 | -1.1313E-04 | 1.0036E-03 | -6.5712E-01 |
| A20 | -4.0881E-08 | 1.7980E-06 | 1.4858E-06 | 2.1953E-05 | 1.0708E-05 | -5.9318E-05 | 2.7817E-01 |
| A22 | 0.0000E+00 | 0.0000E+00 | 0.0000E+00 | 0.0000E+00 | 0.0000E+00 | 0.0000E+00 | -8.4498E-02 |
| A24 | 0.0000E+00 | 0.0000E+00 | 0.0000E+00 | 0.0000E+00 | 0.0000E+00 | 0.0000E+00 | 1.7934E-02 |
| A26 | 0.0000E+00 | 0.0000E+00 | 0.0000E+00 | 0.0000E+00 | 0.0000E+00 | 0.0000E+00 | -2.5227E-03 |
| A28 | 0.0000E+00 | 0.0000E+00 | 0.0000E+00 | 0.0000E+00 | 0.0000E+00 | 0.0000E+00 | 2.1114E-04 |
| A30 | 0.0000E+00 | 0.0000E+00 | 0.0000E+00 | 0.0000E+00 | 0.0000E+00 | 0.0000E+00 | -7.9544E-06 |
| Surface numeral | 9 | 10 | 11 | 12 | 13 | 14 | 15 |
| K | -9.9000E+01 | -5.2781E+00 | 9.8048E-01 | -2.0944E-02 | -2.6253E-01 | 4.0071E+01 | -1.0301E+01 |
| A4 | 1.5127E-02 | 1.1304E-02 | 3.5408E-02 | 6.9167E-02 | 6.6419E-02 | -4.3725E-02 | -1.9923E-02 |
| A6 | -1.0712E-01 | -9.0575E-03 | -6.8198E-02 | -7.5950E-02 | -1.4855E-02 | 1.0537E-02 | -7.2917E-04 |
| A8 | 2.8053E-01 | 1.3250E-02 | 5.0753E-02 | 4.5768E-02 | -7.0940E-03 | -1.2896E-03 | 2.7685E-03 |
| A10 | -4.9886E-01 | -1.7577E-02 | -2.3873E-02 | -2.1386E-02 | 5.4008E-03 | -2.4281E-04 | -1.3742E-03 |
| A12 | 6.0598E-01 | 1.6000E-02 | 7.8226E-03 | 7.3685E-03 | -1.7527E-03 | 1.9802E-04 | 3.9466E-04 |
| A14 | -5.1946E-01 | -1.0255E-02 | -1.8555E-03 | -1.8268E-03 | 3.6245E-04 | -5.4600E-05 | -7.4051E-05 |
| A16 | 3.2134E-01 | 4.7022E-03 | 3.2825E-04 | 3.2515E-04 | -5.2633E-05 | 8.7460E-06 | 9.4948E-06 |
| A18 | -1.4496E-01 | -1.5531E-03 | -4.5096E-05 | -4.1681E-05 | 5.5501E-06 | -9.1335E-07 | -8.5184E-07 |
| A20 | 4.7684E-02 | 3.6906E-04 | 5.0473E-06 | 3.8474E-06 | -4.2791E-07 | 6.4997E-08 | 5.3986E-08 |
| A22 | -1.1303E-02 | -6.2392E-05 | -4.6874E-07 | -2.5338E-07 | 2.3868E-08 | -3.1904E-09 | -2.4061E-09 |
| A24 | 1.8787E-03 | 7.3116E-06 | 3.4405E-08 | 1.1619E-08 | -9.3646E-10 | 1.0662E-10 | 7.3790E-11 |
| A26 | -2.0763E-04 | -5.6397E-07 | -1.7934E-09 | -3.5280E-10 | 2.4476E-11 | -2.3211E-12 | -1.4826E-12 |
| A28 | 1.3694E-05 | 2.5732E-08 | 5.6843E-11 | 6.3805E-12 | -3.8206E-13 | 2.9723E-14 | 1.7570E-14 |
| A30 | -4.0766E-07 | -5.2579E-10 | -8.0612E-13 | -5.2077E-14 | 2.6911E-15 | -1.7000E-16 | -9.3115E-17 |

From the left image, the middle image, the right image of FIG. 4B, a longitudinal spherical aberration diagram, an astigmatism diagram, and a distortion diagram of the optical system 10 in the fourth embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 4B, the longitudinal spherical aberration, the field curvature, and the distortion of the optical system 10 have been controlled, such that the optical system 10 of the embodiment has good imaging quality.

Fifth embodiment

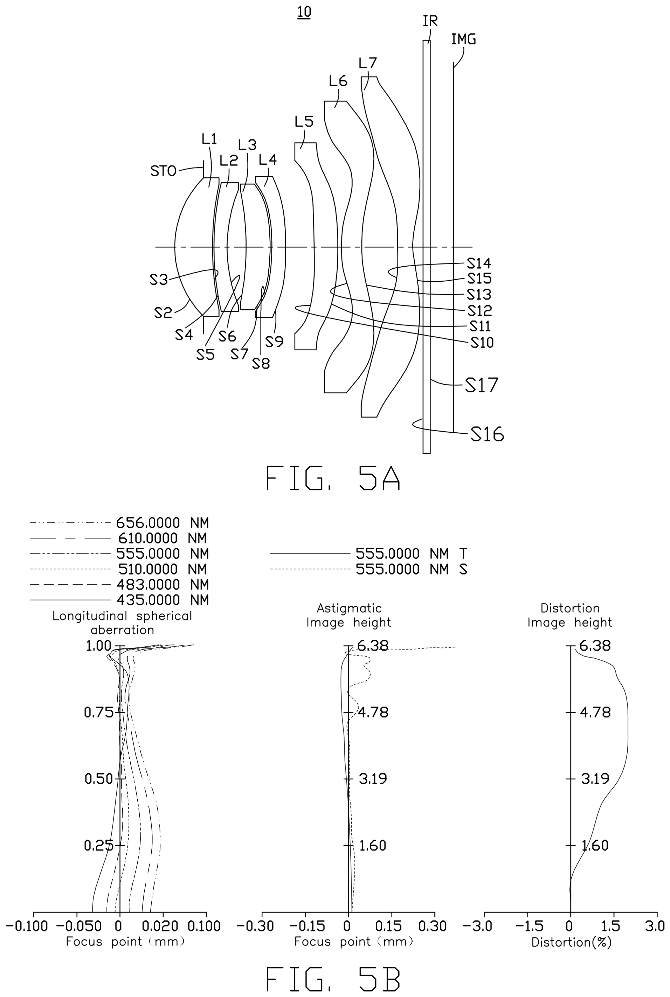

Referring to FIG. 5A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a negative focal power. The object side surface S8 of the fourth lens L4 is concave near the optical axis and is concave near the periphery thereof, and the image side surface S9 of the fourth lens L4 is convex near the optical axis and is convex near the periphery thereof. The fifth lens L5 has a positive focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 5a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 5a

| Fifth embodiment | | | | | | | | | |
|---|---|---|---|---|---|---|---|---|---|
| EFL=6.78mm, FNO=1.65, FOV=83.80deg, TTL=8.29mm | | | | | | | | | |
| Surface numeral | Surface name object side | Surface type sphere | Y radius infinity | Thickness infinity | Material | refractive index | Abbe number | Focal length | Effective semi-diameter |
| STO | aperture stop | sphere | infinity | -0.850 | | | | | 2.054 |
| S2 | first lens | asphere | 2.968 | 1.133 | plastic | 1.546 | 55.932 | 7.24 | 2.055 |
| S3 | | asphere | 10.309 | 0.030 | | | | | 1.931 |
| S4 | second lens | asphere | 7.344 | 0.400 | plastic | 1.666 | 20.370 | -25.99 | 1.900 |
| S5 | | asphere | 5.045 | 0.548 | | | | | 1.724 |
| S6 | third lens | asphere | -50.184 | 0.715 | plastic | 1.537 | 55.685 | 16.93 | 1.718 |
| S7 | | asphere | -7.729 | 0.050 | | | | | 1.843 |
| S8 | fourth lens | asphere | -12.210 | 0.400 | plastic | 1.677 | 19.239 | -35.99 | 1.850 |
| S9 | | asphere | -24.804 | 0.885 | | | | | 2.063 |
| S10 | fifth lens | asphere | -11.243 | 0.683 | plastic | 1.570 | 37.400 | 102.40 | 2.555 |
| S11 | | asphere | -9.635 | 0.105 | | | | | 3.048 |
| S12 | sixth lens | asphere | 4.389 | 0.615 | plastic | 1.537 | 55.685 | 9.80 | 3.731 |
| S13 | | asphere | 25.288 | 1.060 | | | | | 4.297 |
| S14 | seventh lens | asphere | -49.941 | 0.459 | plastic | 1.537 | 55.685 | -4.76 | 4.783 |
| S15 | | asphere | 2.702 | 0.308 | | | | | 5.024 |
| S16 | filter IR | sphere | infinity | 0.210 | glass | 1.518 | 64.197 | | 6.968 |
| S17 | | sphere | infinity | 0.690 | | | | | 6.968 |

(continued)

| Fifth embodiment | | | | | | | | | |
|---|---|---|---|---|---|---|---|---|---|
| EFL=6.78mm, FNO=1.65, FOV=83.80deg, TTL=8.29mm | | | | | | | | | |
| Surface numeral | Surface name object side | Surface type sphere | Y radius infinity | Thickness infinity | Material | refractive index | Abbe number | Focal length | Effective semi-diameter |
| IMG | imaging plane | sphere | infinity | 0.000 | | | | | 6.329 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 5b shows the coefficients of high-order terms that may be used for each aspherical mirror surface in the fifth embodiment, wherein each aspherical surface shape may be defined by the formula provided in the first embodiment.

Table 5b

| Fifth embodiment | | | | | | | |
|---|---|---|---|---|---|---|---|
| Aspheric Coefficients | | | | | | | |
| Surface numeral | 2 | 3 | 4 | 5 | 6 | 7 | 8 |
| K | -5.7311E-02 | -7.1898E+00 | 6.2626E-01 | 3.9163E-01 | 7.1582E+01 | -6.6098E-01 | 5.1083E-01 |
| A4 | 4.0687E-04 | -3.0675E-03 | -7.6697E-03 | -3.8639E-03 | -8.8083E-03 | -1.1799E-02 | -1.8686E-02 |
| A6 | 2.0736E-03 | 2.3709E-03 | 1.8054E-03 | 4.2585E-03 | 3.3589E-03 | 5.3855E-03 | 6.4356E-03 |
| A8 | -2.8066E-03 | -2.3618E-03 | -2.7800E-03 | -1.0415E-02 | -1.3750E-02 | -3.0769E-02 | -3.5678E-02 |
| A10 | 2.8013E-03 | 1.9521E-03 | 3.6122E-03 | 1.3832E-02 | 1.7440E-02 | 3.8414E-02 | 4.5403E-02 |
| A12 | -1.7401E-03 | -7.1590E-04 | -2.3541E-03 | -1.0672E-02 | -1.3559E-02 | -2.6055E-02 | -3.1419E-02 |
| A14 | 6.7718E-04 | 1.7302E-05 | 8.7653E-04 | 4.9888E-03 | 6.5093E-03 | 1.0788E-02 | 1.3275E-02 |
| A16 | -1.5917E-04 | 6.5926E-05 | -1.8523E-04 | -1.3694E-03 | -1.8847E-03 | -2.7133E-03 | -3.4095E-03 |
| A18 | 2.0659E-05 | -1.7932E-05 | 2.1110E-05 | 2.0143E-04 | 3.0361E-04 | 3.7946E-04 | 4.8573E-04 |
| A20 | -1.1399E-06 | 1.4646E-06 | -1.0427E-06 | -1.1780E-05 | -2.0933E-05 | -2.2535E-05 | -2.9081E-05 |
| Surface numeral | 9 | 10 | 11 | 12 | 13 | 14 | 15 |
| K | -3.8392E+01 | 5.0585E+00 | -2.0076E+00 | -2.5144E-02 | -1.3603E+00 | 2.6487E+01 | -1.1551E+01 |
| A4 | -9.9432E-03 | 5.6844E-03 | 3.5138E-02 | 7.2860E-02 | 6.5956E-02 | -5.6512E-02 | -2.5583E-02 |
| A6 | -6.0798E-03 | 6.8439E-03 | -7.0525E-02 | -8.2691E-02 | -1.2426E-02 | 2.4823E-02 | 7.8760E-03 |
| A8 | 1.1605E-03 | -1.2927E-02 | 5.8918E-02 | 5.4701E-02 | -8.4774E-03 | -1.0642E-02 | -2.6469E-03 |
| A10 | 9.7211E-04 | 1.0090E-02 | -3.3994E-02 | -2.8306E-02 | 5.4527E-03 | 3.5277E-03 | 6.5724E-04 |
| A12 | -8.6579E-04 | -5.1110E-03 | 1.4797E-02 | 1.0610E-02 | -1.5503E-03 | -7.8256E-04 | -1.0740E-04 |
| A14 | 3.1436E-04 | 1.7879E-03 | -4.9442E-03 | -2.8117E-03 | 2.7188E-04 | 1.1794E-04 | 1.1706E-05 |
| A16 | -6.0922E-05 | -4.3564E-04 | 1.2730E-03 | 5.2919E-04 | -3.1965E-05 | -1.2510E-05 | -8.8713E-07 |
| A18 | 5.8789E-06 | 7.1917E-05 | -2.5208E-04 | -7.1352E-05 | 2.5754E-06 | 9.5642E-07 | 4.9310E-08 |
| A20 | -1.6886E-07 | -7.5918E-06 | 3.7933E-05 | 6.9139E-06 | -1.4013E-07 | -5.3190E-08 | -2.1496E-09 |
| A22 | 0.0000E+00 | 4.5920E-07 | -4.2306E-06 | -4.7793E-07 | 4.8283E-09 | 2.1394E-09 | 7.7696E-11 |
| A24 | 0.0000E+00 | -1.2056E-08 | 3.3588E-07 | 2.3026E-08 | -8.4747E-11 | -6.0771E-11 | -2.2939E-12 |
| A26 | 0.0000E+00 | 0.0000E+00 | -1.7810E-08 | -7.3548E-10 | -1.9111E-13 | 1.1579E-12 | 4.9823E-14 |

| Surface numeral | 9 | 10 | 11 | 12 | 13 | 14 | 15 |
|---|---|---|---|---|---|---|---|
| A28 | 0.0000E+00 | 0.0000E+00 | 5.6199E-10 | 1.4014E-11 | 3.5784E-14 | -1.3289E-14 | -6.7180E-16 |
| A30 | 0.0000E+00 | 0.0000E+00 | -7.9447E-12 | -1.2068E-13 | -4.5397E-16 | 6.9473E-17 | 4.0943E-18 |

From the left image, the middle image, the right image of FIG. 5B, a longitudinal spherical aberration diagram, an astigmatism diagram, and a distortion diagram of the optical system 10 in the fifth embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 5B, the longitudinal spherical aberration, the field curvature, and the distortion of the optical system 10 have been controlled, such that the optical system 10 of the embodiment has good imaging quality.

Sixth embodiment

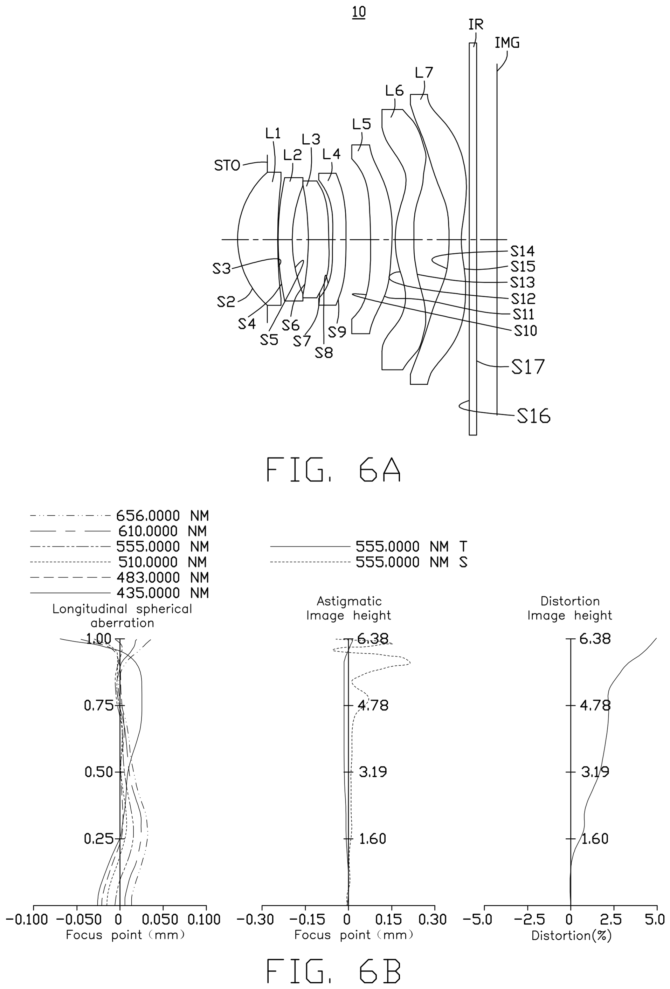

Referring to FIG. 6A, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a negative focal power. The object side surface S8 of the fourth lens L4 is concave near the optical axis and is concave near the periphery thereof, and the image side surface S9 of the fourth lens L4 is convex near the optical axis and is convex near the periphery thereof. The fifth lens L5 has a negative focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 6a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 6a

| Sixth embodiment | | | | | | | | | |
|---|---|---|---|---|---|---|---|---|---|
| EFL=6.89mm, FNO=1.60, FOV=81.00deg, TTL= 8.33mm | | | | | | | | | |
| Surface numeral | Surface name object side | Surface type sphere | Y radius infinity | Thickness infinity | Material | refractive index | Abbe number | Focal length | Effective semi-diameter |
| STO | aperture stop | sphere | infinity | -0.944 | | | | | 2.153 |
| S2 | first lens | asphere | 2.931 | 1.271 | plastic | 1.546 | 55.932 | 6.25 | 2.155 |
| S3 | | asphere | 17.544 | 0.038 | | | | | 2.035 |
| S4 | second lens | asphere | 9.788 | 0.431 | plastic | 1.666 | 20.370 | -14.91 | 1.987 |
| S5 | | asphere | 4.844 | 0.514 | | | | | 1.756 |
| S6 | third lens | asphere | -96.771 | 0.687 | plastic | 1.537 | 55.685 | 21.29 | 1.756 |
| S7 | | asphere | -10.241 | 0.102 | | | | | 1.897 |
| S8 | fourth lens | asphere | -29.936 | 0.430 | plastic | 1.677 | 19.239 | -52.24 | 1.916 |
| S9 | | asphere | -196.195 | 0.799 | | | | | 2.124 |

(continued)

| Sixth embodiment | | | | | | | | | |
|---|---|---|---|---|---|---|---|---|---|
| EFL=6.89mm, FNO=1.60, FOV=81.00deg, TTL= 8.33mm | | | | | | | | | |
| Surface numeral | Surface name object side | Surface type sphere | Y radius infinity | Thickness infinity | Material | refractive index | Abbe number | Focal length | Effective semi-diameter |
| S10 | fifth lens | asphere | -11.637 | 0.697 | plastic | 1.570 | 37.400 | 97.61 | 2.587 |
| S11 | | asphere | -9.833 | 0.100 | | | | | 3.051 |
| S12 | sixth lens | asphere | 4.333 | 0.595 | plastic | 1.537 | 55.685 | 10.07 | 3.730 |
| S13 | | asphere | 20.824 | 1.125 | | | | | 4.212 |
| S14 | seventh lens | asphere | -39.291 | 0.400 | plastic | 1.537 | 55.685 | -4.70 | 4.417 |
| S15 | | asphere | 2.703 | 0.280 | | | | | 4.695 |
| S16 | filter IR | sphere | infinity | 0.210 | glass | 1.518 | 64.197 | | 6.968 |
| S17 | | sphere | infinity | 0.651 | | | | | 6.968 |
| IMG | imaging plane | sphere | infinity | 0.000 | | | | | 6.329 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 6b shows the coefficients of high-order terms that may be used for each aspherical mirror surface in the sixth embodiment, wherein each aspherical surface shape may be defined by the formula provided in the first embodiment.

Table 6b

| Sixth embodiment | | | | | | | |
|---|---|---|---|---|---|---|---|
| Aspheric Coefficients | | | | | | | |
| Surface numeral | 2 | 3 | 4 | 5 | 6 | 7 | 8 |
| K | -1.0837E-01 | -1.2480E+01 | 7.7494E-01 | 2.3375E-01 | -9.9000E+01 | -3.8757E+00 | 3.0803E+01 |
| A4 | 3.0827E-04 | 1.0697E-03 | -4.4421E-03 | -3.4444E-03 | -8.1055E-03 | -3.6401E-03 | -1.2465E-02 |
| A6 | 1.6189E-03 | -1.2162E-02 | -1.4703E-02 | -4.8347E-03 | 2.9444E-03 | -1.8230E-02 | -1.4844E-02 |
| A8 | -1.4399E-03 | 1.8567E-02 | 2.4742E-02 | 9.6071E-03 | -1.0441E-02 | 1.5670E-02 | 4.6268E-03 |
| A10 | 9.6839E-04 | -1.4764E-02 | -2.1295E-02 | -1.0052E-02 | 1.1704E-02 | -1.2383E-02 | 2.0146E-03 |
| A12 | -4.2648E-04 | 7.3041E-03 | 1.1572E-02 | 7.0493E-03 | -8.7207E-03 | 6.8028E-03 | -4.0222E-03 |
| A14 | 1.2559E-04 | -2.3114E-03 | -4.0282E-03 | -3.2010E-03 | 4.2660E-03 | -2.2871E-03 | 2.7254E-03 |
| A16 | -2.3725E-05 | 4.5420E-04 | 8.7061E-04 | 9.0730E-04 | -1.3054E-03 | 4.4995E-04 | -9.4975E-04 |
| A18 | 2.6039E-06 | -5.0390E-05 | -1.0610E-04 | -1.4495E-04 | 2.2642E-04 | -4.8500E-05 | 1.6664E-04 |
| A20 | -1.2930E-07 | 2.4068E-06 | 5.5728E-06 | 1.0088E-05 | -1.7042E-05 | 2.2877E-06 | -1.1535E-05 |
| Surface numeral | 9 | 10 | 11 | 12 | 13 | 14 | 15 |
| K | 9.9000E+01 | 3.9293E+00 | 8.6570E-01 | -1.0715E-02 | 4.4151E-01 | 5.8949E+01 | -1.3245E+01 |
| A4 | -1.0125E-02 | 1.2681E-02 | 5.2675E-02 | 8.6026E-02 | 6.2904E-02 | -1.0465E-01 | -6.2997E-02 |
| A6 | -6.8506E-03 | -1.3012E-02 | -1.0517E-01 | -1.0028E-01 | -3.0968E-04 | 7.7863E-02 | 4.3936E-02 |
| A8 | 2.8003E-03 | 1.2418E-02 | 8.7801E-02 | 6.6223E-02 | -2.3172E-02 | -4.2825E-02 | -2.1509E-02 |

(continued)

| Surface numeral | 9 | 10 | 11 | 12 | 13 | 14 | 15 |
|---|---|---|---|---|---|---|---|
| A10 | -1.1121E-03 | -9.4465E-03 | -4.6892E-02 | -3.3857E-02 | 1.4366E-02 | 1.6153E-02 | 6.9323E-03 |
| A12 | 3.5636E-04 | 4.9599E-03 | 1.7551E-02 | 1.2848E-02 | -4.8282E-03 | -4.1862E-03 | -1.5330E-03 |
| A14 | -5.0579E-05 | -1.8112E-03 | -4.6935E-03 | -3.5240E-03 | 1.0720E-03 | 7.7117E-04 | 2.4198E-04 |
| A16 | -5.3166E-06 | 4.5636E-04 | 8.8401E-04 | 6.9440E-04 | -1.6795E-04 | -1.0346E-04 | -2.7957E-05 |
| A18 | 2.4429E-06 | -7.7865E-05 | -1.1118E-04 | -9.8400E-05 | 1.9064E-05 | 1.0206E-05 | 2.3896E-06 |
| A20 | -1.7815E-07 | 8.5941E-06 | 7.8006E-06 | 1.0012E-05 | -1.5781E-06 | -7.3828E-07 | -1.5079E-07 |
| A22 | 0.0000E+00 | -5.5213E-07 | 1.1196E-08 | -7.2400E-07 | 9.4438E-08 | 3.8598E-08 | 6.9213E-09 |
| A24 | 0.0000E+00 | 1.5610E-08 | -6.1699E-08 | 3.6296E-08 | -3.9800E-09 | -1.4162E-09 | -2.2410E-10 |
| A26 | 0.0000E+00 | 0.0000E+00 | 6.1166E-09 | -1.1988E-09 | 1.1202E-10 | 3.4530E-11 | 4.8379E-12 |
| A28 | 0.0000E+00 | 0.0000E+00 | -2.7539E-10 | 2.3461E-11 | -1.8893E-12 | -5.0178E-13 | -6.2341E-14 |
| A30 | 0.0000E+00 | 0.0000E+00 | 5.0181E-12 | -2.0607E-13 | 1.4427E-14 | 3.2857E-15 | 3.6196E-16 |

From the left image, the middle image, the right image of FIG. 6B, a longitudinal spherical aberration diagram, an astigmatism diagram, and a distortion diagram of the optical system 10 in the sixth embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 6B, the longitudinal spherical aberration, the field curvature, and the distortion of the optical system 10 have been controlled, such that the optical system 10 of the embodiment has good imaging quality.

Seventh embodiment

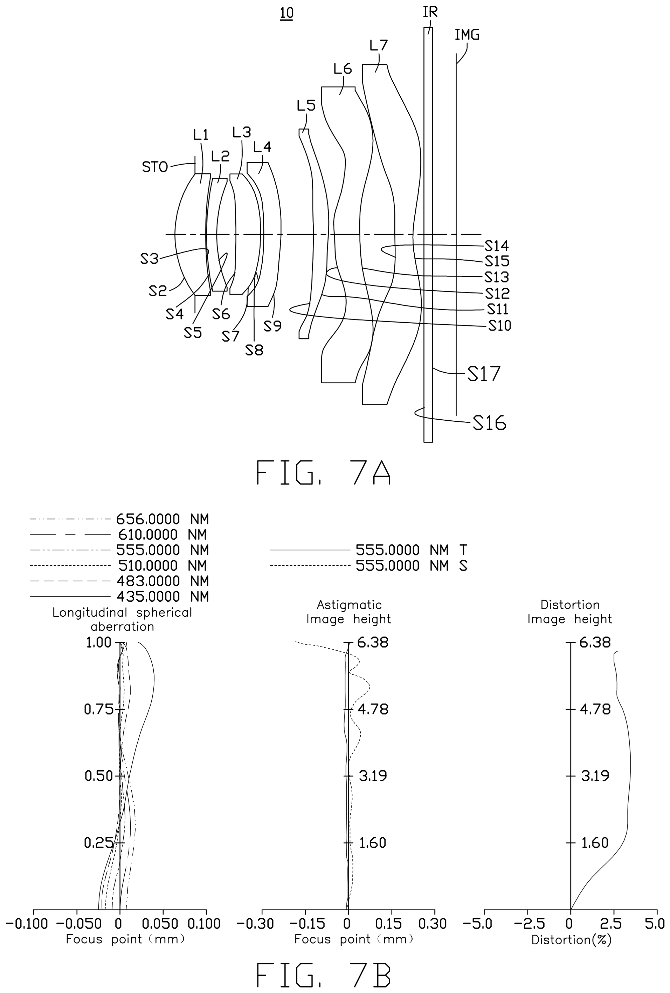

Referring to FIG. 7A and FIG. 7B, the optical system 10 of the embodiment includes, in order from the object side to the image side along the optical axis, the first lens L1, the second lens L2, the third lens L3, the fourth lens L4, the fifth lens L5, the sixth lens L6, and the seventh lens L7.

The first lens L1 has a positive focal power. The object side surface S2 of the first lens L1 is convex near the optical axis and is convex near the periphery thereof, and the image side surface S3 of the first lens L1 is concave near the optical axis and is concave near the periphery thereof. The second lens L2 has a negative focal power. The object side surface S4 of the second lens L2 is convex near the optical axis and is convex near the periphery thereof, and the image side surface S5 of the second lens L2 is concave near the optical axis and is concave near the periphery thereof. The third lens L3 has a positive focal power. The object side surface S6 of the third lens L3 is concave near the optical axis and is concave near the periphery thereof, and the image side surface S7 of third lens L3 is convex near the optical axis and is convex near the periphery thereof. The fourth lens L4 has a negative focal power. The object side surface S8 of the fourth lens L4 is concave near the optical axis and is concave near the periphery thereof, and the image side surface S9 of the fourth lens L4 is convex near the optical axis and is convex near the periphery thereof. The fifth lens L5 has a negative focal power. The object side surface S10 of the fifth lens L5 is concave near the optical axis and is concave near the periphery thereof, and the image side surface S11 of the fifth lens L5 is convex near the optical axis and is convex near the periphery thereof. The sixth lens L6 has a positive focal power. The object side surface S12 of the sixth lens L6 is convex near the optical axis and is concave near the periphery thereof, and the image side surface S13 of the sixth lens L6 is concave near the optical axis and is convex near the periphery thereof. The seventh lens L7 has a negative focal power. The object side surface S14 of the seventh lens L7 is concave near the optical axis and is concave near the periphery thereof. The image side surface S15 of the seventh lens L7 is concave near the optical axis and is convex near the periphery thereof.

Table 7a shows various parameters of the optical system 10 in the embodiment, wherein the focal length, the refractive index, and the Abbe number are obtained by visible rays with a reference wavelength of 555 nm. The units of the Y radius, the thickness, and the focal length are mm. The meanings of other parameters are the same as those of the first embodiment.

Table 7a

| Seventh embodiment | | | | | | | | | |
|---|---|---|---|---|---|---|---|---|---|
| EFL=6.13mm, FNO=1.80, FOV= 89.00deg, TTL=7.97mm | | | | | | | | | |
| Surface numeral | Surface name object side | Surface type sphere | Y radius infinity | Thickness infinity | Material | refractive index | Abbe number | Focal length | Effective semi-diameter |
| STO | aperture stop | sphere | infinity | -0.562 | | | | | 1.703 |
| S2 | first lens | asphere | 2.917 | 0.874 | plastic | 1.546 | 55.932 | 7.25 | 1.703 |
| S3 | | asphere | 9.914 | 0.031 | | | | | 1.601 |
| S4 | second lens | asphere | 6.126 | 0.300 | plastic | 1.666 | 20.370 | -23.53 | 1.583 |
| S5 | | asphere | 4.319 | 0.516 | | | | | 1.527 |
| S6 | third lens | asphere | -25.202 | 0.700 | plastic | 1.537 | 55.685 | 12.72 | 1.542 |
| S7 | | asphere | -5.423 | 0.102 | | | | | 1.697 |
| S8 | fourth lens | asphere | -8.584 | 0.453 | plastic | 1.677 | 19.239 | -22.51 | 1.730 |
| S9 | | asphere | -20.077 | 0.942 | | | | | 2.013 |
| S10 | fifth lens | asphere | -10.278 | 0.406 | plastic | 1.650 | 36.950 | -50.19 | 2.752 |
| S11 | | asphere | -15.202 | 0.166 | | | | | 2.923 |
| S12 | sixth lens | asphere | 3.808 | 0.743 | plastic | 1.688 | 50.160 | 6.40 | 3.646 |
| S13 | | asphere | 25.404 | 1.001 | | | | | 4.140 |
| S14 | seventh lens | asphere | -79.668 | 0.506 | plastic | 1.537 | 55.685 | -4.94 | 4.425 |
| S15 | | asphere | 2.747 | 0.322 | | | | | 4.772 |
| S16 | filter IR | sphere | infinity | 0.210 | glass | 1.518 | 64.197 | | 6.866 |
| S17 | | sphere | infinity | 0.697 | | | | | 6.866 |
| IMG | imaging plane | sphere | infinity | 0.000 | | | | | 6.131 |

Wherein, EFL is the effective focal length of the optical system 10, FNO is the aperture number of the optical system 10, FOV is the maximum field of view of the optical system 10. TTL is the distance from the object side surface of the first lens to the imaging plane along the optical axis, that is the total optical length.

Table 7b shows the coefficients of high-order terms that may be used for each aspherical mirror surface in the seventh embodiment, wherein each aspherical surface shape may be defined by the formula provided in the first embodiment.

Table 7b

| Seventh embodiment | | | | | | | |
|---|---|---|---|---|---|---|---|
| Aspheric Coefficients | | | | | | | |
| Surface numeral | 2 | 3 | 4 | 5 | 6 | 7 | 8 |
| K | -1.1236E-01 | -1.2125E+01 | -3.7796E-01 | 3.9899E-02 | 9.9000E+01 | 2.5837E+00 | 3.1654E+00 |
| A4 | 5.8687E-04 | -8.4287E-03 | -1.5738E-02 | -6.0216E-03 | -9.1966E-03 | 6.5355E-03 | 4.5548E-03 |
| A6 | 3.9153E-03 | 1.9434E-03 | -6.2969E-05 | -1.9398E-03 | -5.6594E-03 | -7.3826E-02 | -7.8566E-02 |
| A8 | -5.7958E-03 | 1.4542E-02 | 1.8134E-02 | 3.4490E-03 | 4.7020E-03 | 1.3971E-01 | 1.3331E-01 |
| A10 | 6.0486E-03 | -2.5151E-02 | -2.9079E-02 | -1.2755E-03 | -6.2471E-03 | -2.2596E-01 | -2.1863E-01 |

(continued)

| Seventh embodiment | | | | | | | |
|---|---|---|---|---|---|---|---|
| Aspheric Coefficients | | | | | | | |
| Surface numeral | 2 | 3 | 4 | 5 | 6 | 7 | 8 |
| A12 | -3.9943E-03 | 2.1460E-02 | 2.4948E-02 | -1.5934E-03 | 4.1808E-03 | 2.8923E-01 | 3.0922E-01 |
| A14 | 1.6719E-03 | -1.0792E-02 | -1.2826E-02 | 2.2911E-03 | -1.5352E-03 | -2.8892E-01 | -3.5178E-01 |
| A16 | -4.2662E-04 | 3.2065E-03 | 3.9273E-03 | -1.2133E-03 | 2.4315E-04 | 2.2865E-01 | 3.1199E-01 |
| A18 | 5.9944E-05 | -5.1609E-04 | -6.5049E-04 | 3.1032E-04 | 4.5367E-06 | -1.4475E-01 | -2.1113E-01 |
| A20 | -3.5451E-06 | 3.4461E-05 | 4.4347E-05 | -3.0357E-05 | -2.8913E-06 | 7.2358E-02 | 1.0676E-01 |
| A22 | 0.0000E+00 | 0.0000E+00 | 0.0000E+00 | 0.0000E+00 | 0.0000E+00 | -2.7569E-02 | -3.9351E-02 |
| A24 | 0.0000E+00 | 0.0000E+00 | 0.0000E+00 | 0.0000E+00 | 0.0000E+00 | 7.6038E-03 | 1.0211E-02 |
| A26 | 0.0000E+00 | 0.0000E+00 | 0.0000E+00 | 0.0000E+00 | 0.0000E+00 | -1.4133E-03 | -1.7618E-03 |
| A28 | 0.0000E+00 | 0.0000E+00 | 0.0000E+00 | 0.0000E+00 | 0.0000E+00 | 1.5709E-04 | 1.8109E-04 |
| A30 | 0.0000E+00 | 0.0000E+00 | 0.0000E+00 | 0.0000E+00 | 0.0000E+00 | -7.8485E-06 | -8.3827E-06 |
| Surface numeral | 9 | 10 | 11 | 12 | 13 | 14 | 15 |
| K | -6.6275E+01 | -7.6757E+01 | 6.7244E+00 | -8.6868E-02 | 2.0888E+01 | -6.2490E+01 | -7.2853E+00 |
| A4 | -1.4264E-03 | 2.9337E-02 | 7.3129E-02 | 8.0468E-02 | 7.4704E-02 | -2.6940E-02 | -1.1459E-02 |
| A6 | -1.1794E-02 | -3.4057E-02 | -1.5035E-01 | -1.1808E-01 | -2.8989E-02 | -1.2682E-02 | -1.3308E-02 |
| A8 | -3.0730E-02 | 2.3633E-02 | 1.3470E-01 | 9.0780E-02 | -2.2647E-03 | 9.2080E-03 | 9.2295E-03 |
| A10 | 1.1012E-01 | -8.9029E-03 | -7.8160E-02 | -5.1427E-02 | 6.3934E-03 | -3.1393E-03 | -3.4251E-03 |
| A12 | -1.8752E-01 | 1.8204E-04 | 3.1975E-02 | 2.1446E-02 | -2.9339E-03 | 8.5712E-04 | 8.6223E-04 |
| A14 | 2.0511E-01 | 1.7577E-03 | -9.4137E-03 | -6.5155E-03 | 7.6786E-04 | -1.8592E-04 | -1.5456E-04 |
| A16 | -1.5464E-01 | -1.0714E-03 | 1.9779E-03 | 1.4320E-03 | -1.3342E-04 | 2.9399E-05 | 1.9999E-05 |
| A18 | 8.2603E-02 | 3.6065E-04 | -2.8641E-04 | -2.2698E-04 | 1.6197E-05 | -3.2778E-06 | -1.8747E-06 |
| A20 | -3.1529E-02 | -7.9456E-05 | 2.6016E-05 | 2.5838E-05 | -1.3979E-06 | 2.5604E-07 | 1.2694E-07 |
| A22 | 8.5449E-03 | 1.1875E-05 | -9.9252E-07 | -2.0880E-06 | 8.5517E-08 | -1.3920E-08 | -6.1338E-09 |
| A24 | -1.6059E-03 | -1.1927E-06 | -6.7208E-08 | 1.1678E-07 | -3.6262E-09 | 5.1597E-10 | 2.0600E-10 |
| A26 | 1.9895E-04 | 7.6867E-08 | 1.0981E-08 | -4.2957E-09 | 1.0138E-10 | -1.2438E-11 | -4.5652E-12 |
| A28 | -1.4613E-05 | -2.8566E-09 | -5.7491E-10 | 9.3482E-11 | -1.6808E-12 | 1.7584E-13 | 6.0006E-14 |
| A30 | 4.8194E-07 | 4.6177E-11 | 1.1377E-11 | -9.1189E-13 | 1.2516E-14 | -1.1064E-15 | -3.5425E-16 |

From the left image, the middle image, the right image of FIG. 7B, a longitudinal spherical aberration diagram, an astigmatism diagram, and a distortion diagram of the optical system 10 in the seventh embodiment at different focal lengths are shown, respectively. The longitudinal aberration diagram represents the deviation of the focus point when the rays with different wavelengths travel through the lenses of the optical system 10. The astigmatism diagram represents the curvatures in the sagittal direction and in the tangential direction. The distortion diagram represents the magnitude of distortion corresponding to different field of views. From FIG. 7B, the longitudinal spherical aberration, the field curvature, and the distortion of the optical system 10 have been controlled, such that the optical system 10 of the embodiment has good imaging quality.

Table 8 shows values of FNO, FOV, TTL/ImgH, f1/f, f2/f, f3/f, f4/f, f5/f, f6/f, f7/f, R11/f, R12/f, R21/f, R22/f, R31/f, R32/f, |R41|/f, |R42|/f, R51/f, R52/f, R61/f, R62/f, R71/f, R72/f, AT23/(AT12+AT34+AT56), AT45/(AT12+AT34+AT56), AT67/(AT12+AT34+AT56), CT1/CT2, CT2/CT3, CT3/CT4, CT4/CT5, CT5/CT6, CT6/CT7, SD51/SD42, and SD11/SD42 in the optical systems of the first to seventh embodiments.

Table 8

| | First embodiment | Second embodiment | Third embodiment | Fourth embodiment | Fifth embodiment | Sixth embodiment | Seventh embodiment |
|---|---|---|---|---|---|---|---|
| FNO | 1.680 | 1.680 | 1.682 | 1.680 | 1.650 | 1.600 | 1.800 |
| FOV | 85.64deg | 84.33deg | 83.50deg | 82.50deg | 83.80deg | 81.00deg | 89.00deg |
| TTL/ImgH | 1.260 | 1.282 | 1.307 | 1.330 | 1.310 | 1.316 | 1.272 |
| f1/f | 1.022 | 1.027 | 1.056 | 1.009 | 1.067 | 0.908 | 1.183 |
| f2/f | -2.905 | -2.984 | -3.964 | -3.342 | -3.834 | -2.164 | -3.838 |
| |f3|/f | 2.235 | 2.205 | 13.963 | 64.727 | 2.497 | 3.089 | 2.075 |
| |f4|/f | 4.513 | 4.261 | 3.955 | 8.253 | 5.308 | 7.582 | 3.672 |
| |f5|/f | 8.691 | 7.409 | 14.984 | 15.580 | 15.103 | 14.167 | 8.188 |
| f6/f | 1.497 | 1.195 | 1.458 | 1.435 | 1.445 | 1.462 | 1.044 |
| f7/f | -0.746 | -0.782 | -0.730 | -0.752 | -0.703 | -0.682 | -0.805 |
| R11/f | 0.445 | 0.435 | 0.443 | 0.434 | 0.438 | 0.425 | 0.476 |
| R12/f | 1.934 | 1.708 | 1.672 | 1.782 | 1.521 | 2.546 | 1.617 |
| R21/f | 1.065 | 1.011 | 1.228 | 1.158 | 1.083 | 1.421 | 0.999 |
| R22/f | 0.675 | 0.657 | 0.823 | 0.747 | 0.744 | 0.703 | 0.705 |
| R31/f | -4.193 | -3.184 | -3.938 | -4.259 | -7.402 | -14.045 | -4.111 |
| R32/f | -0.942 | -0.872 | -8.365 | -3.821 | -1.140 | -1.486 | -0.885 |
| |R41|/f | 1.427 | 1.290 | 4.330 | 4.875 | 1.801 | 4.345 | 1.400 |
| |R42|/f | 2.718 | 2.388 | 6.969 | 38.059 | 3.658 | 28.475 | 3.275 |
| R51/f | -1.659 | -1.546 | -1.632 | -1.632 | -1.658 | -1.689 | -1.677 |
| R52/f | -1.265 | -2.308 | -1.398 | -1.397 | -1.421 | -1.427 | -2.480 |
| R61/f | 0.664 | 0.568 | 0.639 | 0.636 | 0.647 | 0.629 | 0.621 |
| R62/f | 3.664 | 3.491 | 3.237 | 3.468 | 3.730 | 3.022 | 4.144 |
| R71/f | -7.905 | -10.650 | -7.773 | -8.548 | -7.366 | -5.703 | -12.996 |
| R72/f | 0.423 | 0.438 | 0.414 | 0.424 | 0.399 | 0.392 | 0.448 |
| AT23/(AT12+ AT34+AT56) | 2.948 | 2.510 | 2.960 | 2.767 | 2.950 | 2.142 | 1.723 |
| AT45/(AT12+ AT34+AT56) | 4.769 | 3.796 | 4.363 | 3.714 | 4.767 | 3.328 | 3.145 |

| | First embodiment | Second embodiment | Third embodiment | Fourth embodiment | Fifth embodiment | Sixth embodiment | Seventh embodiment |
|---|---|---|---|---|---|---|---|
| AT67/(AT12+ AT34+AT56) | 5.200 | 4.246 | 5.270 | 4.945 | 5.707 | 4.686 | 3.342 |
| CT1/CT2 | 3.318 | 2.874 | 2.870 | 2.873 | 2.832 | 2.946 | 2.914 |
| CT2/CT3 | 0.404 | 0.520 | 0.600 | 0.652 | 0.560 | 0.628 | 0.429 |
| CT3/CT4 | 2.106 | 1.307 | 1.322 | 1.429 | 1.787 | 1.595 | 1.544 |
| CT4/CT5 | 0.676 | 2.140 | 0.692 | 0.564 | 0.586 | 0.617 | 1.115 |
| CT5/CT6 | 0.919 | 0.313 | 1.112 | 1.106 | 1.111 | 1.172 | 0.547 |
| CT6/CT7 | 1.145 | 1.165 | 1.497 | 1.630 | 1.340 | 1.487 | 1.468 |
| SD51/SD42 | 1.393 | 1.384 | 1.261 | 1.299 | 1.239 | 1.218 | 1.367 |
| SD11/SD42 | 0.959 | 0.974 | 0.966 | 0.956 | 0.996 | 1.014 | 0.846 |
| |f67/f| | 2.341 | 8.681 | 2.335 | 2.676 | 2.143 | 1.949 | 15.080 |
| (|f1|+|f2|)/|f7| | 5.259 | 5.134 | 6.878 | 5.785 | 6.98 | 4.50 | 6.23 |
| |SAG71/CT7| | 1.980 | 1.474 | 2.596 | 2.565 | 2.311 | 2.59 | 1.91 |

According to Table 8, each of the optical systems 10 of the first to fifth embodiments satisfies the following relationships: 1.45<FNO<1.9, 79deg<FOV<91deg, 1.2<TTL/ImgH<1.4, 0.8<f1/f<1.3, -5<f2/f<-1.5, 2<|f3|/f, 3<|f4|/f, 7<|f5|/f, 0.9<f6/f<1.6, -0.9<f7/f<-0.6, 0.3<R11/f<0.6, 1.2<R12/f<3, 0.8<R21/f<1.6, 0.4<R22/f<1.1, R31/f<-2.5, R32/f<-0.7, 1.2<|R41|/f, 2.3<|R42|/f, -2<R51/f<-1.4, -3<R52/f<-1.1, 0.4<R61/f<0.8, 2.3<R62/f<5, R71/f<-3, 0.3<R72/f<0.6, 1.9<|f67/f|<15.5, 4< (|f1|+|f2|)/|f7|<7.0, 1<SD51/SD42<1.7, 1.5<AT23/(AT12+AT34+AT56)<3.5, 1<CT6/CT7<2, 2.7<AT45/(AT12+AT34+AT56)<5.5, 0.7<SD11/SD42<1.2, 2.8<AT67/(AT12+AT34+AT56)<6.5, 2.5<CT1/CT2<3.6, 0.35<CT2/CT3<0.7, 1.1<CT3/CT4<2.3, 0.4<CT4/CT5<2.5, 0.2<CT5/CT6<1.3, 1<CT6/CT7<1.8, 1.9<|SAG71/CT7|<2.6.

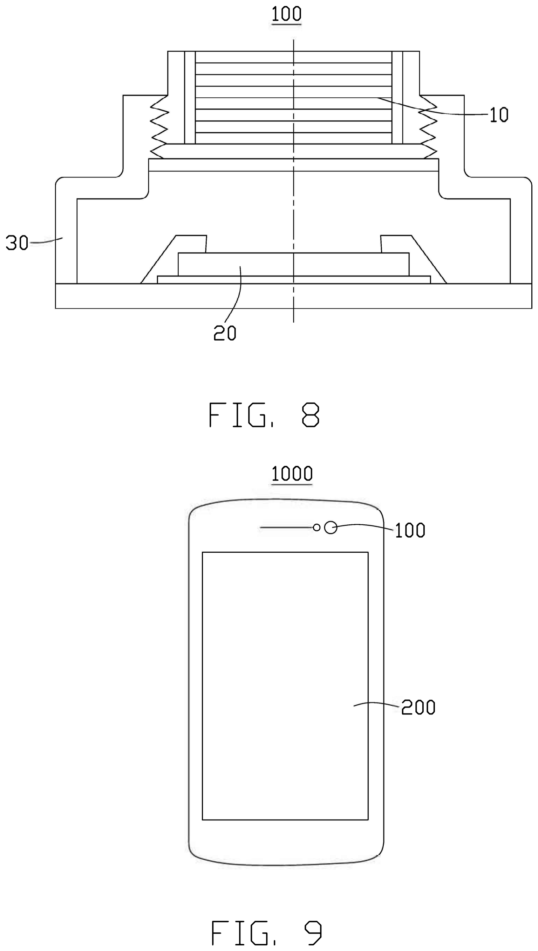

Referring to FIG. 8, an embodiment of the present application further provides a camera lens 100, which includes a photosensitive element 20, a lens barrel 30, and the optical system 10 of any embodiment mentioned in the first aspect. The optical system 10 and the photosensitive element 20 are disposed in the lens barrel 30, and the photosensitive element 20 is located on the image side of the optical system 10. The photosensitive element 20 may be a complementary metal oxide semiconductor (CMOS) or a charge coupled device (CCD).

Referring to FIG. 9, an embodiment of the present application further provides an electronic device 1000. The electronic device 1000 includes a housing 200 and the camera lens 100, and the camera lens 100 is mounted on the housing 200. The electronic device 1000 may be, but is not limited to, a dashcam, a smart phone, a tablet computer, a laptop computer, an e-book reader, a portable multimedia player (PMP), a mobile phone, a video phone, a mobile medical device, or wearable device.

The above embodiments are only for describing but not intended to limit the present disclosure. Although the embodiments of the present application have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1.　An optical system (10) **characterized by** comprising, in order from an object side to an image side along an optical axis of the optical system (10):

　　an aperture stop (STO);
　　a first lens (L1) having a positive focal power, an object side surface (S2) of the first lens (L1) being convex near the optical axis, and an image side surface (S3) of the first lens (L1) being concave near the optical axis;
　　a second lens (L2) having a negative focal power, an object side surface (S4) of the second lens (L2) being convex near the optical axis, and an image side surface (S5) of the second lens (L2) being concave near the optical axis;
　　a third lens (L3) having a focal power, an object side surface (S6) of the third lens (L3) being concave near the optical axis, and an image side surface (S7) of the third lens (L3) being convex near the optical axis;
　　a fourth lens (L4) having a focal power;
　　a fifth lens (L5) having a focal power, an object side surface (S10) of the fifth lens (L5) being concave near the optical axis, and an image side surface (S11) of the fifth lens (L5) being convex near the optical axis;
　　a sixth lens (L6) having a positive focal power, an object side surface (S12) of the sixth lens (L6) being convex near the optical axis, and an image side surface (S13) of the sixth lens (L6) being concave near the optical axis;
　　a seventh lens (L7) having a negative focal power, an object side surface (S14) of the seventh lens (L7) being concave near the optical axis, and an image side surface (S15) of the seventh lens (L7) being concave near the optical axis;
　　wherein the optical system (10) satisfies following relationships:

$$1.45<FNO<1.9,\ 79deg<FOV<91deg,\ and\ 1.2<TTL/ImgH<1.4;$$

　　wherein FNO is an aperture number of the optical system (10), FOV is a full field of view of the optical system (10), TTL is a distance from the object side surface (S2) of the first lens (L1) to an imaging plane (IMG) of the optical system (10) on the optical axis, and ImgH is half of a diagonal length of an effective pixel region on the imaging plane (IMG) of the optical system (10).

2.　The optical system (10) of claim 1, further satisfying at least one of following relationships:

$$0.8<f1/f<1.3;$$

$$-5 < f2/f < -1.5;$$

$$0.9 < f6/f < 1.6;$$

and

$$-0.9 < f7/f < -0.6;$$

wherein f1 is an effective focal length of the first lens (L1), f2 is an effective focal length of the second lens (L2), f7 is an effective focal length of the seventh lens (L7), and f is an effective focal length of the optical system (10).

3. The optical system (10) of claim 1, further satisfying at least one of following relationships:

$$0.3 < R11/f < 0.6;$$

$$1.2 < R12/f < 3;$$

$$0.8 < R21/f < 1.6;$$

$$0.4 < R22/f < 1.1;$$

$$R31/f < -2.5;$$

$$R32/f < -0.7;$$

$$-2 < R51/f < -1.4;$$

$$-3 < R52/f < -1.1;$$

$$0.4 < R61/f < 0.8;$$

$$2.3 < R62/f < 5;$$

$$R71/f < -3;$$

and

$$0.3 < R72/f < 0.6;$$

wherein R11 is a radius of curvature of the object side surface (S2) of the first lens (L1) at the optical axis, R12 is a radius of curvature of the image side surface (S3) of the first lens (L1) at the optical axis, R21 is a radius of curvature of the object side surface (S4) of the second lens (L2) at the optical axis, R22 is a radius of curvature of the image side surface (S5) of the second lens (L2) at the optical axis, R31 is a radius of curvature of the object side surface (S6) of the third lens (L3) at the optical axis, R32 is a radius of curvature of the image side surface (S7) of the third lens (L3) at the optical axis, f is an effective focal length of the optical system (10), R51 is a radius of curvature of the object side surface (S10) of the fifth lens (L5) at the optical axis, R52 is a radius of curvature of the image side surface (S11) of the fifth lens (L5) at the optical axis, R61 is a radius of curvature of the object side surface (S12) of the sixth lens (L6) at the optical axis, R62 is a radius of curvature of the image side surface (S13) of the sixth lens (L6) at the optical axis, R71 is a radius of curvature of the object side surface (S14) of the seventh lens (L7) at the optical axis, and R72 is a radius of curvature of the image side surface (S15) of the seventh lens (L7) at the optical axis.

4. The optical system (10) of claim 1, further satisfying following relationship:

$$1.9 < |f67/f| < 15.5;$$

wherein f67 is a combined focal length of the sixth lens (L6) and the seventh lens (L7), and f is an effective focal length of the optical system (10), f7 is an effective focal length of the seventh lens (L7).

5. The optical system (10) of claim 1, further satisfying following relationship:

$$4 < (|f1| + |f2|)/|f7| < 7.0;$$

wherein f7 is an effective focal length of the seventh lens (L7), f1 is an effective focal length of the first lens (L1), and f2 is an effective focal length of the second lens (L2).

6. The optical system (10) of claim 1, further satisfying following relationship:

$$1.5 < AT23/(AT12+AT34+AT56) < 3.5;$$

wherein AT12 is a distance on the optical axis from the image side surface (S3) of the first lens (L1) to the object side surface (S4) of the second lens (L2), AT23 is a distance on the optical axis from the image side surface (S5) of the second lens (L2) to the object side surface (S6) of the third lens (L3), AT34 is a distance on the optical axis from the image side surface (S7) of the third lens (L3) to the object side surface of the fourth lens (L4), and AT56 is a distance on the optical axis from the image side surface (S11) of the fifth lens (L5) to the object side surface (S12) of the sixth lens (L6).

7. The optical system (10) of claim 1, further satisfying following relationship:

$$2.7 < AT45/(AT12+AT34+AT56) < 5.5;$$

wherein AT12 is a distance on the optical axis from the image side surface (S3) of the first lens (L1) to the object side surface (S4) of the second lens (L2), AT34 is a distance on the optical axis from the image side surface (S7) of the third lens (L3) to the object side surface of the fourth lens (L4), AT45 is a distance on the optical axis from the image side surface of the fourth lens (L4) to the object side surface (S10) of the fifth lens (L5), and AT56 is a distance on the optical axis from the image side surface (S11) of the fifth lens (L5) to the object side surface (S12) of the sixth lens (L6).

8. The optical system (10) of claim 1, further satisfying following relationship:

$$2.8 < AT67/(AT12+AT34+AT56) < 6.5;$$

wherein AT12 is a distance on the optical axis from the image side surface (S3) of the first lens (L1) to the object side surface (S4) of the second lens (L2), AT34 is a distance on the optical axis from the image side surface (S7) of the third lens (L3) to the object side surface of the fourth lens (L4), AT56 is a distance on the optical axis from the image side surface (S11) of the fifth lens (L5) to the object side surface (S12) of the sixth lens (L6), and AT67 is a distance on the optical axis from the image side surface (S13) of the sixth lens (L6) to the object side surface (S14) of the seventh lens (L7).

9. The optical system (10) of claim 1, further satisfying at least one of following relationships:

$$2.5 < CT1/CT2 < 3.6;$$

$$0.35 < CT2/CT3 < 0.7;$$

$$1.1 < CT3/CT4 < 2.3;$$

$$0.4<CT4/CT5<2.5;$$

$$0.2<CT5/CT6<1.3;$$

and

$$1<CT6/CT7<1.8;$$

wherein CT1 is a thickness of the first lens (L1) on the optical axis, CT2 is a thickness of the second lens (L2) on the optical axis, CT3 is a thickness of the third lens (L3) on the optical axis, CT4 is a thickness of the fourth lens (L4) on the optical axis, CT5 is a thickness of the fifth lens (L5) on the optical axis, CT6 is a thickness of the sixth lens (L6) on the optical axis, and CT7 is a thickness of the seventh lens (L7) on the optical axis.

10. The optical system (10) of claim 1, further satisfying following relationship:

$$1.1<SD51/SD42<1.5;$$

wherein SD42 is half of a maximum effective aperture of the image side surface of the fourth lens (L4), and SD51 is half of a maximum effective aperture of the object side surface (S10) of the fifth lens (L5).

11. The optical system (10) of claim 1, further satisfying following relationship:

$$0.7<SD11/SD42<1.1;$$

wherein SD11 is half of a maximum effective aperture of the object side surface (S2) of the first lens (L1), and SD42 is half of a maximum effective aperture of the image side surface of the fourth lens (L4).

12. The optical system (10) of claim 1, further satisfying following relationship:

$$1.9<|SAG71/CT7|<2.6;$$

wherein SAG71 is a distance along the optical axis from a position where the object side surface (S14) of the seventh lens (L7) has a maximum effective aperture to an intersection of the object side surface (S14) of the seventh lens (L7) and the optical axis, and CT7 is a thickness of the seventh lens (L7) on the optical axis.

13. The optical system (10) of claim 1, further satisfying following relationship:

$$2<|f3|/f;$$

$$3<|f4|/f;$$

and

$$7<|f5|/f;$$

wherein f3 is an effective focal length of the third lens (L3), f4 is an effective focal length of the fourth lens (L4), f5 is an effective focal length of the fifth lens (L5), and f is an effective focal length of the optical system (10).

14. A camera lens (100) **characterized by** comprising:

a lens barrel (30);
the optical system (10) of any one of claims 1 to 8, the optical system (10) disposed in the lens barrel (30); and
a photosensitive element (20) disposed in the lens barrel (30) and located on the image side of the optical system (10).

15. An electronic device (1000) **characterized by** comprising:

a housing (200); and
the camera lens (100) of claim 9, and the camera lens (100) mounted on the housing (200).

FIG. 1A

FIG. 1B

FIG. 2A

FIG. 2B

FIG. 3A

FIG. 3B

FIG. 4A

FIG. 4B

FIG. 5A

FIG. 5B

10

FIG. 6A

656.0000 NM
610.0000 NM
555.0000 NM
510.0000 NM
483.0000 NM
435.0000 NM

555.0000 NM T
555.0000 NM S

Longitudinal spherical
aberration

Astigmatic
Image height

Distortion
Image height

Focus point（mm）

Focus point（mm）

Distortion(%)

FIG. 6B

FIG. 7A

FIG. 7B

100

10

30

20

FIG. 8

1000

100

200

FIG. 9